# EUROPEAN PATENT APPLICATION

(11) **EP 2 979 740 A1**
(43) Date of publication of application: **03.02.2016**
(21) Application number: 14179011.3
(22) Date of filing: 29.07.2014
(51) Int. Cl.: B01D 25/00, B01D 63/08

(54) **Filter module for dead-end and cross-flow filtration**

(71) Applicant: Pall Corporation, Port Washington, NY 11050 (US)
(72) Inventor: Diemer, Wolfgang, 73550 Waldstetten (DE); Geiser, Heinz Thomas, 73577 Ruppertshofen (DE); Zeiler, Martin, 73529 Schwäbisch Gmünd (DE); Fischer, Ulrich, 73540 Heubach (DE); Yoward, Nick, Emsworth, Hampshire PO10 7BH (GB)
(74) Representative: Hoeger, Stellrecht & Partner Patentanwälte mbB

(57) **Abstract**

A filter module (10) for dead-end and cross-flow filtration processes is proposed, especially for use in the fields of the food and beverage industry, the chemical industry, the pharmaceutical industry, biotechnology and environmental applications, the filter module comprising:
a frame element (12) comprising two substantially planar faces defining first and second openings at opposite sides thereof;
a first and a second filter medium in the form of a sheet material, said filter media each having a first side and a second side;
the first and second filter media being attachable in a fluid tight manner to the frame element and fully cover its first and second openings, respectively, a space defined and delimited by the frame element and the two filter media, said second sides of the filter media being arranged to face said space; and said frame element comprising one or more frame sections (26, 28) accommodating one or more ports (30, 32) providing a fluid flow path from said space to the exterior of the filter module.

## Description

### FIELD OF THE INVENTION

The present invention relates to a filter module for use in a dead-end filtration or a cross-flow filtration process.

The present invention further relates to filter module sets comprising two or more of the inventive filter modules assembled in the form of a stack.

Another aspect of the present invention resides in a filtering device comprising one or more of the inventive filter modules and/or one or more of the inventive filter module stacks.

Still another aspect of the present invention relates to a method for assembling a plurality of filter modules to form a stack.

### BACKGROUND OF THE INVENTION

Dead end and cross-flow filtration processes are used in numerous fields of processing fluids, especially in the fields of the food and beverage industry, the chemical industry, the pharmaceutical industry, in biotechnology and environmental applications.

The filtration processes may be large scale processes as part of production processes or smaller scale processes in laboratories.

Filter modules for these fields of application are widely known.

In the PCT publication WO 2006/044711 A1 separation elements are disclosed serving to purify, segregate, and/or concentrate a variety of fluids and/or fluid components. The separation elements include permeable membranes which are thermally bonded to both sides of a polymeric structural member including a plate-like member to support the membranes. The space delimited by the membranes and the structural member is divided into a plurality of channels due to a multiplicity of protrusions on the plate-like member serving to support and bond the membranes. A plurality of separation elements may be assembled as a stack and sealed to one another to form a separation module.

WO 00/47307 A1 discloses a cross-flow separation device comprising a feed channel, a plurality of permeate passages isolated from one another and extending perpendicular to the direction of feed flow, and a porous medium, typically a membrane, positioned between a shear region of the feed channel and the permeate passages. The separation device is designed to operate at high shear rates. Permeate flow and/or transmembrane pressure at each permeate passage is individually controlled.

### BRIEF SUMMARY OF THE INVENTION

In both types of filtration processes, i.e., the dead end and the cross-flow filtration, it is important to provide filter modules which may be easily handled and optionally regenerated if they are not designed as single use or disposable modules.

The object of the present invention is to meet the above demands and to provide a filter module which allows improving the economy of the filtration processes.

This object is met by a filter module as defined in claim 1.

The basic structure of the inventive filter module comprises a frame element comprising two opposite, substantially planar faces defining openings at opposite sides of the filter module. The openings are fully covered by the sheet material of the filter media. The second sides of the filter media are oriented to face the space provided within the frame element.

Preferably the frame element is integrally formed as a one-piece component.

The two faces of the frame element at opposite sides thereof may be arranged in parallel.

The frame element as a whole may have a substantial planar configuration.

When used in large scale production the packing density is of import as well as the manufacturing costs for a module, in particular when calculated as costs per square meter of the filter surface provided by a module.

A parallel orientation of the two faces is preferred when a high packing density of the filter modules is desired. This allows a planar configuration of the frame element and the filter module as a whole, in particular with a low thickness or total height measured perpendicular to the filter media.

The inventive filter module may be used with fluid flow directions outside-in or inside-out. When used in an outside-in direction the first sides of the filter media operate as the upstream side, the second sides as the downstream side and the space provided within the module serves as a filtrate or permeate space. When used in an inside-out direction the second sides form the upstream sides of the filter media and the first sides operate as the downstream sides thereof. The space provided within the module then receives the non-filtrate.

The frame element may be made of a broad variety of materials, including but not limited to plastics material, ceramic and metal, while plastics material is the preferred material in many cases.

The frame elements may be designed to provide the inventive filter modules as self-supporting modules, which simplifies handling of the modules, e.g., when assembling a plurality of filter modules in a set to form a stack.

Typically, the filter media will be attached to the frame element. The filter media are preferably attached to the frame element in a fluid tight manner, i.e., sealed to it, preferably by welding the media to the frame element. Thereby a filter module may be obtained which may individually be integrity tested after assembly and before it is built into a stack or assembled in a filtering device.

The present invention provides a filter module with numerous advantages and especially allows cross-flow filtration with high flow rates and a minimized pressure drop. This is achieved because there is no need to deflect the flow direction of the non-filtrate fluid flow from the inlet end to the outlet end of the filter module which allows short path lengths and minimizes dead volume.

The filter modules according to the present invention may be easily designed and manufactured in a robust pressure resistant configuration.

In addition, the inventive filter module allows a high package density within a filtering device and moreover a pre-assembly of a plurality of filter modules into a filter module stack with precise flow channel geometry in between adjacent filter modules.

Furthermore, the filter modules according to the present invention can easily be designed as disposable modules.

According to a further aspect of the present invention the filtration capacity may be easily scaled up to the required level by arranging two or more of the inventive filter modules in a stack as defined in claim 9.

The assembly of the filter modules of the present invention in the form of stacks is possible without using gaskets or separate sealing elements which not only simplifies handling but also improves the reliability of the so formed stack.

The filter modules of the present invention furthermore allow integrating inlet and outlet manifolds in a pre-assembled stack.

According to another aspect of the present invention a filtering device may be provided as set out in claim 12.

The filter modules according to the present invention allow the design of an open channel filtering device incorporating the inventive filter modules. Such an open channel system may be used for the processing of highly viscous fluids as well as not pre-filtered suspensions containing a large amount of particles and/or particles of a large particle size (e.g., 50 µm or more).

Still according to a further aspect of the present a method is provided to efficiently assemble the inventive filter modules in a stack. Such method is defined in claim 15.

### DETAILED DESCRIPTION OF THE INVENTION

Preferred filter media to be used for manufacturing the filter modules of the present invention are membranes. Membranes which are especially suitable for use in the inventive filter modules are disclosed in WO 2006/044711 A1 which is herewith incorporated by reference in its entirety. Supported as well as unsupported membranes may be used as filter media according to the present invention.

The space provided within the frame element and delimited by the filter media is preferably designed as a unitary space, i.e., all parts of the space are in fluid connection with one another and substantially uniform pressure conditions exist within the space.

The fluid flow path for the non-filtrate between two adjacent filter modules in a stack may be provided with a substantially continuously decreasing cross-sectional area. Thereby, the pressure conditions, especially the pressure drop along the fluid flow path may be substantially constant and a substantially constant fluid flow rate is achieved. Furthermore, this feature allows adapting the cross-section to the reduced flow rate of the non-filtrate along the length of the flow path.

In other specific applications, e.g., single-pass cross-flow filtration of fluids where a substantial increase of the viscosity along the fluid flow path from the inlet to the outlet end of the filter module is observed, control of the shear forces created is important. The filter modules of the present invention may be easily adapted to meet such requirement by providing a substantially continuously increasing cross-sectional area of the fluid flow path of the non-filtrate.

An adaptation of the cross-sectional area of the fluid flow path may be accomplished in different ways:
Selecting a frame element with a wedge-like shaped arrangement of the two faces provides a fluid flow path between two adjacent filter modules in a stack with a substantially continuously decreasing or increasing cross-sectional area of the fluid flow path for the non-filtrate, depending on the direction of the fluid flow with respect to the frame element. These modifications of the inventive filter module show a decreasing or increasing height of the fluid flow paths in a direction perpendicular to the surface of the filter media.

Still, the frame element may still be provided with said frame sections accommodating a port having a substantially invariable thickness or total height along their whole length (planar configuration).

Another way to provide a substantially continuously decreasing or increasing cross-sectional area for the fluid flow paths is to vary the width of the fluid flow paths in a direction parallel to the surface of the filter media.

Furthermore, both ways to modify the cross-sectional area of the fluid flow paths can be combined with each other.

In case a low profile, i.e., a low total height, of the filter modules is desired the cross-section of the ports provided in the frame sections of the frame element is limited. Therefore, it may be desirable to increase the length of the fluid flow path and likewise the length of the frame sections accommodating the ports such that an increased overall cross-sectional area by a multiplicity of ports may be achieved.

While the filter modules of the present invention may equally be used in dead-end and cross-flow filtration, typically, a filter module specifically designed for operating in a dead-end filtration will show a ratio of the flow path length of the non-filtrate to the width of the filter module in a direction perpendicular to the non-filtrate flow path of larger than 1, whereas a filter module specifically designed for cross-flow filtration will show a ratio of the flow path length of the non-filtrate to the width of the filter module in a direction perpendicular to the non-filtrate flow path of less than 1.

Preferably at least one of the filter media of the filter module of the present invention is structured on the upstream side in an area adjacent to the frame element.

In a preferred embodiment, a structural element may be incorporated within the filtrate/permeate space of the filter module, said structural element serving to deform the sheet material of the filter media and thereby structure same.

More preferably, the structural element comprises guiding elements which to some extent deform the sheet material of the filter media such that flow channels are obtained on the upstream side of the filter media directing the fluid flow of the non-filtrate in a direction defined by the guiding elements. These flow channels may provide a uniform fluid flow of the non-filtrate on substantially all of the upstream side of the filter media. This feature maximizes the service life of the inventive filter module. While the structural element may be made of a variety of materials, including plastics materials, ceramic and metal, plastics material is preferred.

The guiding elements creating flow channels on the upstream side of the filter media preferably are limited in their cross-sectional area perpendicular to the fluid flow direction of the non-filtrate such that the cross-sectional area provided for the fluid flow paths at the inlet end of the filter module is reduced by at most about 30% or less. More preferably, the cross-sectional area of the guiding elements of a filter module amounts to about 1% to about 20%, more preferably to about 1% to about 10%, of the cross-sectional area provided by a filter module for the fluid flow at the inlet end. Most preferably, the cross-sectional area of the guiding elements is limited to about 1% to about 5%.

Within the afore-mentioned limits, the decrease of the available surface of the filter elements is readily acceptable.

The afore-mentioned preferred cross-sectional areas of the guiding elements apply for filter modules which have a substantially uniform cross-sectional area or a decreasing cross-sectional area of the fluid flow paths from the inlet to the outlet end of the filter module.

In case an increasing cross-sectional area for the fluid flow paths from the inlet end to the outlet end is desired, the same recommendations apply, however, with respect to the cross-sectional area provided by a filter module at the outlet end instead of the inlet end.

In applications where the cross-sectional area of the non-filtrate fluid flow path is designed to decrease or increase from the inlet end to the outlet end the guiding elements may vary in their geometry along the length of the flow paths to provide such an effect.

Preferably, the decrease or increase of the cross-sectional area is provided by modifying the height of the cross-sectional area as measured in a direction perpendicular to the surface of the filter medium.

Typically the faces of the frame element defining the openings will be provided in a wedge-shaped configuration as mentioned above. Such decrease or increase of the cross-sectional area is preferably limited to about 20%.

Preferably the flow direction defined by the guiding elements is oriented obliquely, especially perpendicular to the fluid flow of the filtrate/permeate in the unitary filtrate/permeate space. Such an arrangement has the advantage that inlet and outlet openings for non-filtrate, filtrate/permeate and optionally retentate may be easily accommodated in a housing and are furthermore easily accessible for connecting to or disconnecting from the production environment.

In many cases the port in a frame section of the frame element will provide for a filtrate/permeate outlet. Preferably, the filter module comprises two frame sections arranged at opposite ends which serve as ports, e.g., filtrate/permeate outlets. In a number of cases the frame element will have a rectangular shape.

Preferably, the frame sections of the frame elements accommodating the ports are designed to extend beyond the first sides of the filter media attached to the frame elements.

Thereby the frame elements of two adjacent filter modules assembled in a stack may be directly and preferably sealingly connected to one another while the first surfaces of the filter media of the adjacent modules are spaced sufficiently to form a fluid flow channel in between.

Alternatively, separate spacer elements may be used to connect the frame elements of adjacent filter modules and provide a sufficient clearance between the first sides of the filter media of filter modules.

Preferably, the planar faces of the frame element comprise a rim area to which the margins of the filter media may be sealingly attached.

According to a preferred embodiment, the frame sections comprising the ports will comprise edge portions thicker than the portions connecting these frame sections. In a stacked configuration the thicker frame sections provide for a spacing of the filter media of two neighboring filter elements in the stack, which provides a fluid flow path for the non-filtrate. In such preferred configurations, additional spacer elements need not be provided in between two adjacent filter modules, which again facilitates assembling of a plurality of filter modules to form a stack.

Moreover the thicker edge portions may be connected to one another in a fluid tight manner, e.g., glued or welded together.

Optionally, the spacer element and the structural element may be formed as one unitary element which facilitates assembly of the filter module.

The flow paths of the inventive filter modules of the non-filtrate and filtrate/permeate optionally have a straight configuration which minimizes the energy consumption of a filtration process.

Another option is to provide arcuate flow paths for the non-filtrate which lead to turbulences which prevent premature settling of particulate matter and thereby extend the service life of a module. The fluid flow paths for the filtrate/permeate are preferably of a straight configuration.

In a further preferred embodiment the filter module comprises on the upstream side of the filter media structures giving rise to vorticity or turbulence (so-called Dean vortices) in the fluid flow of the non-filtrate. The vorticity or turbulence prevents premature settling and deposition of particulate matter on the upstream side of the filter media especially adjacent to the feed end for the non-filtrate. Thereby the service life of a filter module may be extended and a reduced and more uniform deposition of particulate matter on the available surface area of the filter media may be achieved.

While these structures provided on the upstream side of the filter media may be designed as separate entities, advantageously, the structures may be attached to the filter media so that handling may be facilitated, and even more preferably may be unitarily formed as a surface structure of the filter media.

The structures creating vorticity or turbulences on the upstream side of the filter media are especially effective when positioned adjacent to the feed end of the filter module which quite often may be an area adjacent to a part of the frame element.

The structures creating the vorticity or turbulences, be it in the form of separate structural elements or in the form of a surface structure of the filter media, preferably includes a plurality of ribs extending preferably in a direction obliquely to the fluid flow direction of the non-filtrate.

The ribs of the structure creating vorticity or turbulences may, in addition, be slightly curved, wherein preferably a middle portion of the ribs is positioned closer to the inlet end of the filter module than the other parts of the ribs.

The filter medium is preferably selected from membranes and laminated filter media, and the filter medium may optionally incorporate a spacer element.

The second sides of the filter media are preferably supported in a spaced apart configuration by a spacer element. The spacer element maintains a free cross-sectional area in the space which facilitates maintenance of a uniform fluid flow. While the spacer element may be made of a variety of materials, including plastics materials, ceramic and metal, plastics material is preferred.

However, in contrast to the teaching of the PCT publication WO 2006/044711 A1 the present invention does not require to attach the filter media to the spacer element. Therefore, a unitary space within the frame element may be provided.

When the filter module is operated out-side-in, the filtrate/permeate in the space within the frame element then serving as the filtrate/permeate space will show a uniform fluid flow pattern even in case the pressure drop across the filter media increases over time due to the deposition of particulate matter on the upstream side of the filter media and/or deposition of matter within the pores of the filter media causing fouling of the same.

The uniform fluid flow supports a more uniform use of the filter media giving rise for an extended service period of the filter module up to the point in time when regeneration or replacement of the filter module is needed.

Optionally the filter medium may be designed to incorporate the spacer element and/or the structural element providing the fluid flow channels for the non-filtrate as unitary structure.

The frame element and the spacer element may both be injection molded, optionally as an integral one-piece component. The spacer element can compensate pressure forces exerted during filtration operation and function as a sort of tie-rod structure. This greatly simplifies the design of the frame element as a self-supporting structure.

The present invention further relates to a filter module set comprising two or more filter modules as described above.

The inventive filter module set preferably has the filter modules arranged in a stack with a predetermined distance between the upstream sides of the filter media of successive filter modules of the stack. Thereby uniform cross-sectional areas for the fluid flow paths between adjacent stacked filter modules may be formed.

Preferably the filter modules of a stack are attached to one another to form a self-supported stack, while the individual filter modules need not necessarily be designed with a self-supporting structure.

The frame elements of two subsequent filter modules may include structural elements which allow a form fit of two successive filter modules in the stack.

Preferably such structural elements may be a part of the frame sections and comprise the ports, e.g., serving as filtrate outlet openings of the filter modules. The distance between the upstream surfaces of two successive filter modules in a stack may be provided by means of a support structure or spacer which optionally may incorporate the structure providing vorticity or turbulences on the upstream side of the filter media. The support structure may optionally include guiding elements providing flow channels for the fluid flowing past the first surface.

Alternatively, edge portions of the frame element, preferably the frame sections accommodating the ports, may be designed with a greater thickness and thereby serve to provide for a sufficient distance between the upstream surfaces of adjacent filter modules.

In a stack the support structure and/or spacer and/or guiding elements may be designed such that the fluid flow channels for the non-filtrate provided have a cross-sectional area decreasing or increasing along the fluid flow path.

Preferably, the decrease or increase of the cross-sectional area is predominantly provided by a decrease or increase of the height of the cross-section as measured in a direction perpendicular to the surface of the filter medium. The decrease or increase of the height of the fluid flow paths may be provided by a wedge shaped arrangement the openings of the two faces of the frame element covered by the filter media.

By decreasing or increasing the height of the fluid flow channels for the non-filtrate the cross-sectional area may be modified without changing the surface area of the filter media available along the fluid flow path. Thereby a superior filtration performance is obtained as compared to a decrease or increase based on a modification by a variation of the width of the fluid flow path determined parallel to the surface of the filter media.

The decrease or increase of the cross-sectional area is preferably limited to about 20%.

A support structure or spacer extending across the upstream side of the filter media may be useful especially for filter modules which are to be backwashed so as to prevent the upstream sides of two successive filter modules during backwashing to contact one another which could affect the backwash effect in such area.

The filter modules assembled in a stack preferably are of a polygonal, especially tetragonal, more specifically rectangular shape and comprise a filtrate/permeate outlet at one side, more preferably at two opposite sides of the frame element which is/are different from the sides defining the inlet and outlet ends.

The stack may be provided with outer top and bottom wall portions covering the upper- and lowermost most filter modules in a predefined distance. The outer wall portions may be of a flat design and preferably comprise on their surfaces facing away from the filter module stack reinforcing ribs. Such a design improves the robustness of the filter stack and maintains a stable geometry of the fluid flow paths of the non-filtrate even in cases high feed pressures are necessary during filtration operation. This measure, in addition, supports a uniform fluid flow characteristic for the non-filtrate in the stack.

Furthermore the stack may be provided with an inlet chamber receiving the non-filtrate from an inlet opening. The inlet chamber preferably covers all inlet ends of the filter modules of a stack and may be in direct fluid connection with the feed or inlet ends of the filter modules. The inlet chamber serves to evenly distribute the inflowing non-filtrate to all of the non-filtrate flow paths of the stack of filter modules. Optionally the inlet chamber may comprise a fluid flow distribution element deflecting parts of the inflowing non-filtrate fluid flow.

Correspondingly, the stack when used in cross-flow filtration may be provided with a retentate collecting chamber opposite to the end of the stack where the inlet chamber is provided.

The guiding elements partially deforming the filter media may designed such that when the filter modules are assembled in a stack the guiding elements of adjacent filter modules facing one another may bring and hold sections of filter media in contact with one another. Thereby parallel fluid flow channels may be created which are substantially separated from one another.

Another aspect of the present invention relates to a filtering device comprising a housing accommodating one or more of the filter modules and/or filter module sets of the present invention.

The housing typically provides a filtrate/permeate collecting chamber in fluid connection with the filtrate/permeate space(s) of the one or more filter modules. A filtrate/permeate collecting chamber is arranged at least at one end of the filter modules.

The filtering device may comprise an inlet chamber optionally including a non-filtrate feed distributor providing a homogeneous distribution of the non-filtrate to the filter modules or filter module sets. The non-filtrate feed distributor preferably comprised in the inlet chamber may be in direct fluid connection with the feed or inlet end of all of the filter modules. The feed distributor may comprise an insert dividing the fluid flow of the non-filtrate into a plurality of individual currents.

In case the filtering device is designed for cross-flow filtration preferably a retentate collecting chamber is provided receiving retentate from all retentate or outlet ends of the filter modules. Preferably the housing of the filtering device provides for the retentate collecting chamber.

Typically, the housing provides a feed inlet, a filtrate outlet and optionally a retentate outlet.

According to one embodiment of the invention the filtering device comprises the feed inlet of the housing and the retentate outlet at opposite ends of the housing.

According to another embodiment of the invention the filtering device comprises a filtrate/permeate outlet only at a front side of the housing, thereby facilitating replacement of the filter modules or filter module stacks. For example, the filtering device may be configured such that for replacing the filter module stack only a front cover incorporating the filtrate/permeate outlet needs to be removed. The filter module stack may be removed and a new one inserted into the housing like a drawer. The housing including the inlet and outlet chambers as well as the tubing connecting the feed inlet and the optional retentate outlet may be kept permanently connected and fixedly mounted in the operation environment.

Preferably, for use in such filtering devices the stack of filter modules is fully sealed at the end opposite the end providing for the filtrate/permeate outlets, e.g., by an end plate. The end plate may form a part of the filter module stack. In addition, also a filtrate/permeate collecting chamber may for a part of the stack of filter modules.

In preferred embodiments of the inventive filtering device the feed inlet cross-section is smaller than the combined cross-sections of the retentate and filtrate outlets. Preferably, the ratio of the cross-section of the feed inlet to the combined cross-sections of the retentate and filtrate outlet is about 1:2 or less.

The inventive filter modules or filter module stacks may be welded to end caps which may form a part of the housing of the filtering device and provide filtrate collecting chambers as will be explained in more detail below.

The present invention furthermore relates to a method for assembling a plurality of inventive filter modules to form a stack as defined in claim 15.

The inventive method for assembling a plurality of inventive filter modules can be carried out according to a first variant in that the filter modules are positioned individually one after the other on the assembly tool, and one by one is connected to the stack so far built. In a first sequence the first filter module is placed on the assembly tool, then the second one is placed on top of the first, and the first and second filter modules are connected to one another, preferably forming a sealing bond between the two modules at least in the area of their frame elements representing the frame sections accommodating the ports. In a further sequence one further filter module is placed on top of such preliminary stack and connected to the preliminary stack, again preferably in a sealing manner. This procedure continues until all of the filter modules of the plurality of filter modules to be assembled in the stack have been assembled and connected.

In accordance with another variant of the inventive method two or more of the filter modules to be assembled in a stack are placed on the assembly tool and connected, preferably in a sealing manner, in a single step to one another to form a preliminary stack. This procedure is repeated until all filter modules of the plurality of filter modules have been assembled to form the stack. Two or more preliminary stacks may be formed and assembled and connected to one another in a further step.

In still a further variant of the inventive method all filter modules of the plurality of filter modules are placed on the assembly tool and connected to one another in one single step. Again the connection of the filter modules is made in a way to seal the side faces including the frame sections accommodating the ports. This can be accomplished in various ways.

According to one aspect the frame elements are connected directly to one another, and according to another aspect an interlayer element may be used to cover a face of the stack including the frame sections accommodating the ports and sealingly engage the filter modules of the stack.

In case the filter modules are connected directly to one another it is preferred to provide the frame sections forming a side face of the stack where the frame elements are to be connected in a sealing manner with projections which may be deformed to form a seal in between adjacent filter modules.

According to a further preferred aspect the projections may be designed to provide a form fit between adjacent filter elements at least in one direction.

While the invention relates especially to the following preferred embodiments, it is apparent in view of the disclosure the present application that the invention is indeed not limited to such embodiments.
1. A filter module for use in a dead-end or a cross-flow filtration process, the module comprising:
   a frame element comprising two substantially planar faces defining first and second openings at opposite sides thereof;
   a first and a second filter medium in the form of a sheet material, said filter media each having a first side and a second side;
   the first and second filter media being attachable in a fluid tight manner to the frame element and fully cover its first and second openings, respectively,
   a space defined and delimited by the frame element and the two filter media, said second sides of the filter media being arranged to face said space; and
   said frame element comprising one or more frame sections accommodating one or more ports providing a fluid flow path from said space to the exterior of the filter module.
2. The filter module of embodiment 1, wherein said space defined by the frame element and the two filter media is designed as a unitary space.
3. The filter module of embodiments 1 or 2, wherein a structural element is accommodated in said space, said structural element comprising guiding elements to deform the filter media thereby forming flow channels for directing the non-filtrate fluid flow in a predefined, preferably substantially uniform direction, said direction preferably being obliquely oriented to the fluid flow within said space, said space being preferably designed as a filtrate space.
4. The filter module of embodiment 3, wherein the flow channels formed have a straight or arcuate configuration.
5. The filter module of embodiment 3 or 4, wherein the flow channels for the non-filtrate have a cross-sectional area decreasing in the flow direction, preferably wherein the height of the flow channels as measured in a direction perpendicular to the surface of the filter media decreases up to about 20% along the length of the flow path.
6. The filter module of any one of embodiments 1 to 5, wherein a spacer element is accommodated in said space supporting the first and second filter media in a spaced apart configuration,
   optionally the spacer element comprising the guiding elements and being configured to serve additionally as a structural element.
7. The filter module of any one of embodiments 1 to 6, wherein at least on the surface of one of the filter media serving as an upstream surface a structure is provided for creating turbulences in the fluid flow of the non-filtrate.
8. The filter module of embodiment 7, wherein the structure on the upstream surface of the at least one of the filter media includes ribs extending in an direction oriented obliquely to the fluid flow direction of the non-filtrate, preferably said direction is oriented substantially perpendicular to the direction of the fluid flow,
   optionally the ribs having a slightly curved configuration,
   wherein preferably a middle portion of the ribs is positioned closer to the inlet end of the filter module than the other parts of the ribs.
9. The filter module of embodiment 7 or 8, wherein the structure on the upstream surface of at least one of the filter media is attached to or forms part of the filter medium.
10. The filter module of any one of embodiments 1 to 9, wherein the frame sections of the frame element accommodating a port comprise an outwardly directed projection of a preferably thermoplastic material, optionally said projection being in the form of a flange, preferably said flange being designed to provide a form fit with a frame section of an adjacently positioned further filter module.
11. The filter module of any one of embodiments 1 to 10, wherein the filter media are selected from membranes and laminated filter media, optionally wherein said respective membranes and said laminated filter media incorporate the spacer element.
12. A filter module set comprising two or more of the filter modules according to any one of embodiments 1 to 11, wherein the filter modules are arranged in a stack with a predefined distance in between the respective first sides of the filter media of successive filter modules of the stack, preferably wherein said frame sections accommodating a port are positioned at one or more common side faces of the stack,
   optionally wherein the predetermined distance between the filter media being such that flow channels of substantial uniform cross-sectional areas are formed.
13. The filter module set of embodiment 12, wherein the first surfaces of two successive filter modules in the stack are supported by a support structure on their first sides providing an open fluid flow path, said support element optionally comprising guiding elements providing flow channels for the fluid flowing along said first surface.
14. The filter module set of embodiment 12 or 13, wherein the inlet end for the non-filtrate and the outlet end for the retentate are arranged at opposite ends of the filter modules thus providing a non-deflected, preferably straight or arcuate fluid flow path for the non-filtrate through the stack.
15. The filter module set of embodiment 14, wherein the filter modules are of a polygonal, especially tetragonal, more specifically rectangular shape and comprise a filtrate outlet at one side of the frame element, more preferably at two opposite sides of the frame element, which is/are different from the sides defining the inlet and outlet ends for the non-filtrate and retentate, respectively.
16. A filtering device comprising a housing accommodating one or more of the filter modules according to any one of embodiments 1 to 11 and/or one or more of the filter module sets according of any one of embodiments 12 to 15, the housing of the filtering device comprising a non-filtrate inlet, a filtrate outlet, and optionally a retentate outlet.
17. The filtering device of embodiment 16, wherein the filtering device comprises a feed space, optionally comprising a non-filtrate feed distributor in fluid connection with the non-filtrate inlet providing a substantially homogeneous non-filtrate feed flow for the filter modules and/or the filter module sets, optionally said non-filtrate feed distributor comprises an insert distributing the fluid flow of the non-filtrate in the feed space.
18. The filtering device of embodiment 16 or 17, wherein the filter modules are designed as cross-flow filter modules, said housing of the filtering device including a retentate collecting chamber in fluid connection with the retentate outlet, preferably wherein the housing of the filtering device comprises the feed inlet and the retentate outlet at opposite parts of the housing.
19. The filtering device according to any one of embodiments 16 to 18,
   wherein the cross-section of the feed inlet is smaller than the combined cross-sections of the feed channels of the filter modules, preferably the ratio of the cross-section of the feed inlet of the housing and the combined cross-sections of the feed channels of the filter modules is about 1:2 or less.
20. A method for assembling a plurality of filter modules of any one of embodiments 1 to 11 to form a stack, the method comprising positioning a first filter module on top of an assembly tool,
   positioning a second filter module on top of and aligned with the first filter module;
   connecting the two filter modules to form a stack;
   optionally positioning one or more times one further filter module on top of the stack and connecting the newly positioned filter module to the stack formed so far; or
   alternatively positioning two or more up to all of the filter modules of said plurality of filter modules on top of said assembly tool,
   connecting the multiplicity of positioned filter modules to form a stack in one step;
   positioning eventually remaining filter modules of the plurality of filter modules on top of the so far assembled stack and connecting same thereto in one step;
   optionally repeating this step until all of the filter modules have been assembled in one stack,
   preferably wherein during positioning the filter modules said frame sections accommodating a port are positioned at one or more common side faces of the stack.
21. The method of embodiment 20, wherein the connecting the filter modules includes directly soldering or gluing adjacent filter modules sealingly together.
22. The method of embodiment 20 or 21, wherein connecting of the filter modules includes sealingly attaching one or more side faces of the stack including the ports to an interlayer element, said interlayer element comprising openings matching the positions of the ports.
23. The method of any one of embodiment 20 or 21, wherein the filter modules of the plurality of filter modules include projections outwardly extending from their frame sections accommodating a port,
   optionally wherein the projections of the frame sections are designed to serve adjusting the position of two adjacent filter modules relative to one another and/or wherein the projections are deformed to sealingly connect the two adjacent filter modules.

The present invention will be described in even more detail in the following by way of specific embodiments the features of which however are not to be construed as limitations of the present invention.

### BRIEF DESCRIPTION OF THE DRAWINGS

- Figure 1A: shows a filter module according to the present invention in a top view;
- Figures 1B to 1G: show cross-sections of the filter module of Figure 1A and several variants along the lines IB - IB, IC - IC, ID - ID and IE - IE, respectively;
- Figures 2A and B: show two alternatives of a frame element of the filter module of Figure 1;
- Figure 3A: shows a set of filter modules of Figure 1 assembled as a stack;
- Figure 3B: shows a detailed cross-sectional representation of a part of the stack of Figure 3A along line IIIB - IIIB;
- Figure 4: shows a filtering device according to the present invention;
- Figures 5A to C: show cross-sections of three variants of the filtering device of Figure 4;
- Figures 6A and B: show two further cross sections of a further inventive filtering device;
- Figure 6C: shows a modification of the filtering device of Figure 6A;
- Figure 6D: represents a modification of the filter module included in a filtering device similar to the one of Figure 6A;
- Figures 7A to 7D: show assembly steps of a further embodiment of an inventive filtering device and components thereof;
- Figures 8A to 8D: show an alternative inventive filter module, also assembled in a stack; and
- Figures 9A to 9C: show a further alternative inventive filter module, also assembled in a stack.

### DETAILED DESCRIPTION OF THE DRAWINGS

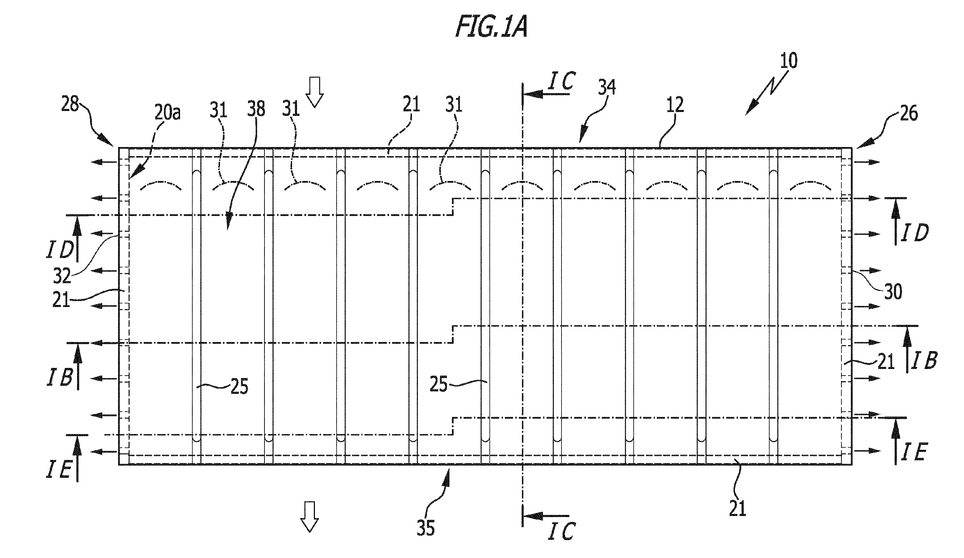

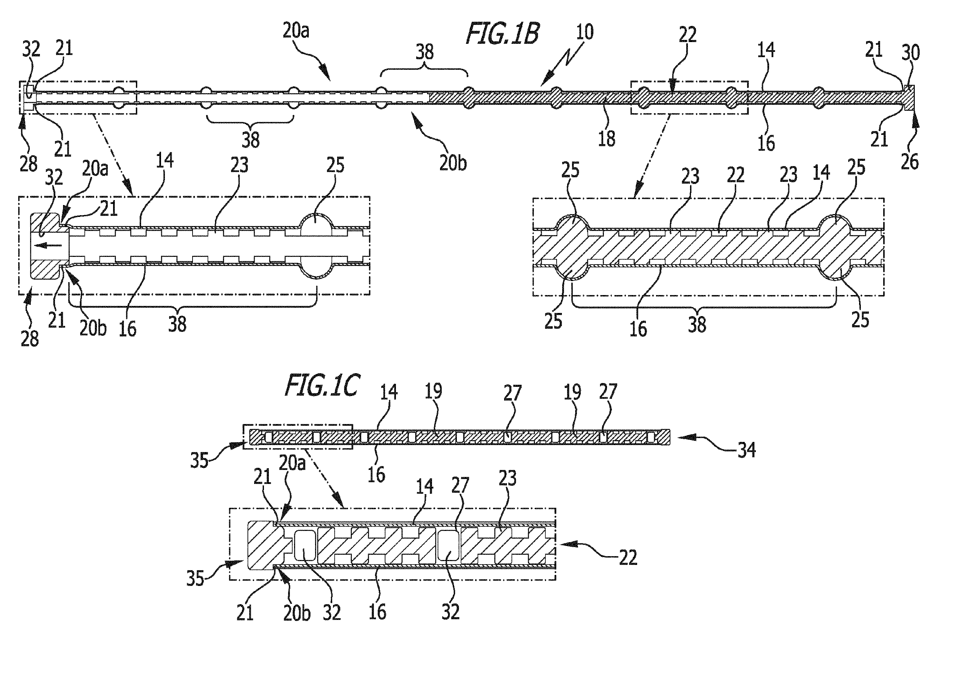

Figure 1A shows a filter module 10 according to the present invention in a top view, while Figure 1B to 1G show a cross section of the filter module 10 and variants thereof along line IB - IB, IC - IC, ID - ID and IE - IE, respectively.

The filter module 10 comprises a rectangular frame element 12, a first and a second filter medium 14, 16 of a sheet material and a spacer element 18. The frame element 12 comprises two opposite substantially planar faces defining first and second (here: upper and lower) openings 20a, 20b.

According to the present invention, the filter media are preferably selected from membranes, including asymmetric membranes, as well as from laminated filter media.

The filter media 14, 16 fully cover both the upper and lower opening 20a, 20b of the frame element 12 and are attached to the frame element 12 in a fluid tight manner, e.g., by a welding seam 21.

The frame element 12 and the filter media 14, 16 form a unitary filtrate space 22 which may accommodate the spacer element 18. While the filter media 14, 16 are in contact with the spacer element 18 and supported by the same, the filter media 14, 16 typically are not bonded to the spacer element 18.

The rectangular frame element 12 comprises two opposite frame parts or edges 26, 28 at least one of which serving as a frame section accommodating a multiplicity of ports. The ports or openings provide for a filtrate or permeate outlet when the filter module is operated in an outside-in mode. In the embodiment of the inventive filter module 10 shown in Figure 1A as well as Figures 1B and 1C both edges 26, 28 comprise the openings 30, 32 such that filtrate may be drained at both edges 26, 28 from the filtrate space 22.

The opposite edges 26, 28 accommodating the ports 30, 32 of the frame element are maintained in their spaced apart positions and connected to one another by transverse sections 34, 35 of the frame element 18.

The thickness of the transverse sections 34, 35 is preferably less than the thickness of the frame sections 26, 28 accommodating the ports 30, 32. When several of the filter modules 10 are arranged in a stack, the frame sections 26, 28 may then provide sufficient clearance between the upstream surfaces of the filter media 14, 16 and at the transverse sections 34 and 35, respectively, of adjacent filter modules 10 thus defining a fluid flow path running parallel to the frame sections 26, 28 from one transverse section 34 (inlet end) to the other transverse section 35 (outlet end).

The spacer element 18 is composed of several strips 19 extending from one edge 26 to the opposite edge 28 of the frame element 12. The strips 19 are arranged in parallel with gaps 27 in between two adjacent strips 19. The gaps 27 preferably are positioned such as to provide a flow path running from one of the filtrate outlets 30 in a frame section 26 to the corresponding filtrate outlet 32 in another frame section 28 at the opposite end of the frame element 12. Preferably, the strips 19 may be connected to one another in a lateral direction. More preferably, the spacer element 18 may be connected to the frame element 12, e.g., to form a unitary component.

The strips 19 comprise a plurality of projections 23 designed to support the filter media 14, 16 during operation of the filter module 10. In addition, the spacer element 18 comprises structural elements 25 extending beyond the tips of the projections 23. The structural or guiding elements 25 deform the filter media 14, 16 so as to provide channel-like structures 38 on the respective upstream surfaces of the filter media 14, 16 to direct the fluid flow on the first, e.g., upstream, side of the filter media 14, 16.

Typically, the guiding elements as shown for the guiding elements 25 in Figure 1A will extend not completely from the inlet end 34 to the outlet end 35, but start and end at a somewhat set back position within the frame element 12. Thereby, the attachment of the filter medium to the frame element 12 by, e.g., a welding seam 21 is facilitated.

Typically, the distance by which the guiding elements are set back from the inlet and outlet ends is about 5 mm or more, more preferably about 10 mm or more. Nevertheless, the guiding elements preferably extend for about 80% or more of the length of the fluid flow paths of a module extending from the inlet to the outlet end.

The filter media 14, 16 may comprise on their first side serving as upstream side turbulence creating structures oriented obliquely, preferably transverse to the fluid flow. One example of such structures is schematically shown in broken lines as arcuate ribs 31 the middle portion of which is positioned closer to the inlet end 34 than their other parts.

Along the fluid flow path of the channels 38, several of the ribs 31 may be provided enhancing the effect of creating turbulences. These turbulences may serve to slow down deposition of particulate matter on the upstream surface of the filter media and provide for a more uniform use of the filter media.

Figure 1C shows a cross-section of the filter module 10 along line IC - IC of Figure 1A which is in parallel to the fluid flow direction of the non-filtrate in an out-side-in filtration process. Within the unitary filtrate space 22, the filtrate is directed by the gaps 27 between the strips 19 in a direction transverse to the fluid flow of the non-filtrate to the ports 30, 32.

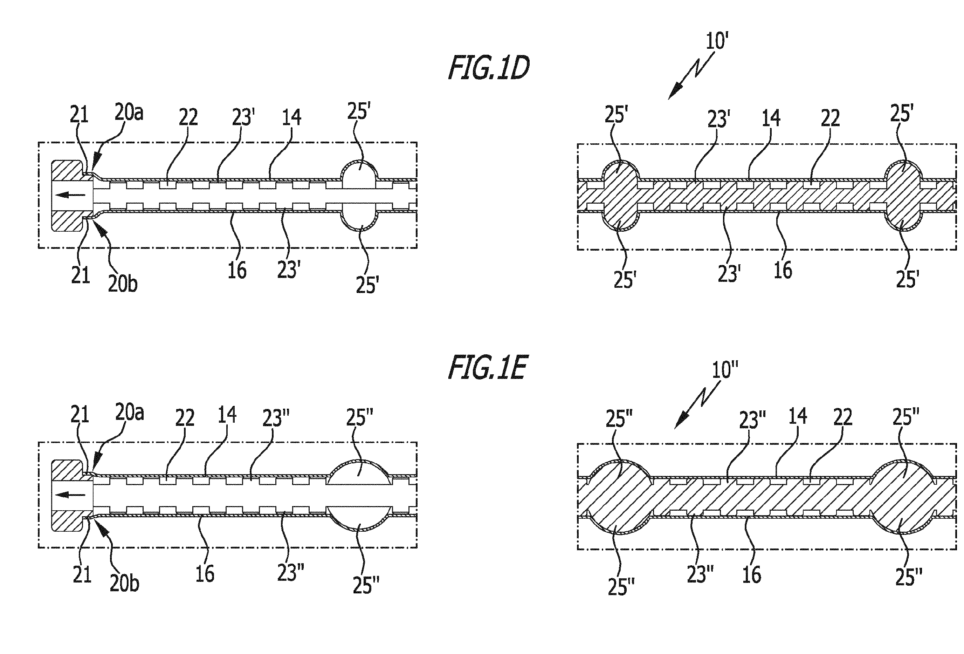

Figure 1D shows a cross-section along line ID - ID of Figure 1A which is closer to the feed inlet 34 of the filter module 10 than line IB - IB. The filter media 14, 16 are arranged and supported by the projections 23 at a smaller distance than in the representation of Figure 1B while the guiding elements 25 have the same height such that a larger cross-section of the fluid flow channels at the feed inlet is achieved.

Figure 1E shows a cross-section along line IE - IE of an alternative arrangement where the cross-section of the guiding elements 25 has been increased which gives rise to a similar or accumulated effect of variation of the cross-sectional area of the fluid flow channels provided for the non-filtrate.

Typically, the variation of the cross-sectional area of the fluid flow paths will be substantially continuous from the feed inlet 34 to the retentate outlet 35, while a step-wise variation is less preferred.

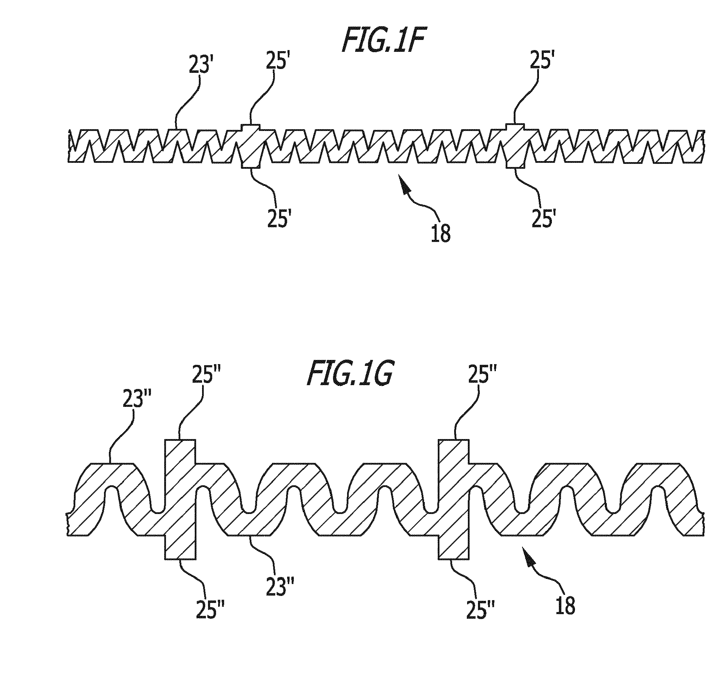

Still, in Figures 1F and 1G, further modifications of the spacer element for a filter module 10 are shown in a cross-section along the line ID - ID. In these variants, supporting projections 23' and 23", respectively, for the filter media have a zigzag and sinusoidal cross-section, respectively, by which the mass of the spacer element 18 may be reduced.

Furthermore, the projections 23, 23' and 23" may be designed with smaller contact areas for supporting the filter media 14, 16. The cross-section of the projections may then in part have a roughly triangular shape (not shown). This feature results in an improved drainage of the filter media 14, 16 which provides for a more effective use in the filtration process.

The guiding elements 25' and 25" again extend beyond the projections 23' and 23", respectively, and thereby deform the filter media to form fluid flow channels on their first sides.

In general, the guiding elements need not be provided in the symmetrical arrangement as shown for the guiding elements 25, 25' and 25".

In an alternative arrangement, guiding elements may be provided only on one side of the frame element. On the other side of the frame element, the filter medium is just supported by projections like the projections 23, 23' and 23" and remains non-deformed.

The guiding elements are then preferably designed to project beyond the frame element. More preferably, the height of the guiding elements is such that they bring the deformed filter medium in contact with the non-deformed filter medium of an adjacent further filter module which is just supported by projections.

In case a form fit between adjacent filter modules is desired, the height of the guiding elements may be made even larger and on the side of the frame element opposite the one including the guiding elements, indentations may be provided into which the guiding elements of an adjacent filter module extend. This may give rise to an improved mechanical stability of a stack of a plurality of filter modules.

In still a further alternative arrangement, guiding elements are provided on both sides of the frame element, however, only at every second position. At the position where a guiding element is omitted, projections support the filter medium and/or an indentation may be provided. The guiding elements of an adjacent filter module may bring the filter medium they deform in contact with a non-deformed filter medium of an adjacent filter module and eventually extend into an indentation provided at the adjacent filter module.

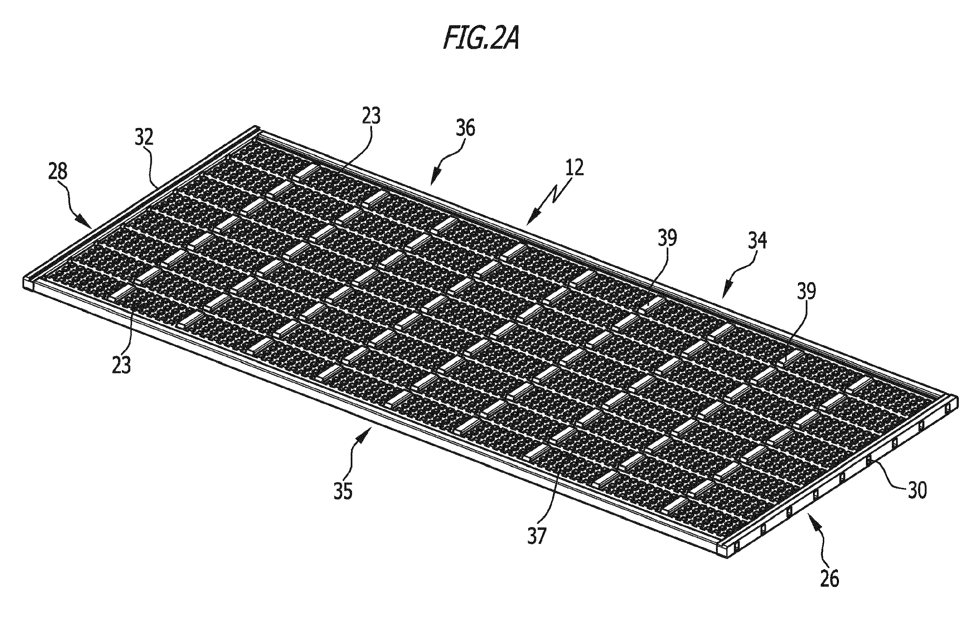

Alternatively, the frame element 12 of the filter module 10 includes a spacer element 36 which is shown in detail in Figure 2A.

The spacer element 36 of the frame element of Figure 2A has a unitary structure and provides also for structural or guiding elements 39 which deform the filter media 14, 16 thereby forming non-filtrate flow channels directing the fluid flow of the non-filtrate on the upstream side of the filter media 14, 16 in a direction from the feed inlet 34 to outlet 35 perpendicular to the fluid flow channels 37 within the filtrate/permeate space 22 when the filter module is operated outside-in. In case where the frame element 12 has filtrate/permeate outlets 30, 32 at opposite sides thereof, the filtrate fluid flow may be directed in two opposite directions within the filtrate space 22.

The guiding elements 39 are regularly intersected in the longitudinal direction running from the feed inlet 34 to the outlet 35, preferably at positions where the fluid flow channels 37 extend between the frame sections comprising the filtrate/permeate outlets 30, 32. Drainage of the filtrate/permeate space is thereby facilitated. This, however, has no noticeable effect on the fluid flow characteristic of the non-filtrate on the upstream side of the filter media since the fluid flow channels created by the deformation of the filter media remain substantially unaffected.

The spacer element 36 comprises a plurality of through holes (not shown) regularly distributed leading from the upper surface of the spacer element 36 to its lower surface, thus providing a unitary filtrate space 22 within the frame element 12.

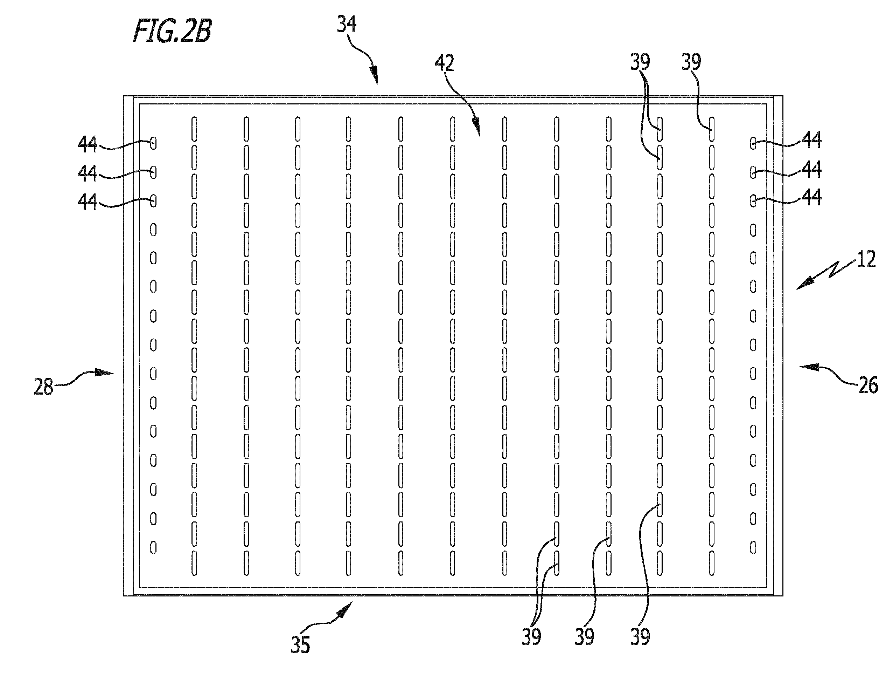

Alternatively, the frame element 12 may include a spacer element 42 as shown in Figure 2B. The spacer element 42 again comprises structural or guiding elements 39 on opposite surfaces thereof, in an arrangement similar to the arrangement shown in Figure 2A for the spacer element 36. In contrast to the spacer element 36 of Figure 2A the spacer element 42 comprises fewer openings 44, e.g., adjacent to the frame sections 26, 28 leading from the upper to the lower side thereof and thereby still providing a unitary space 22 within the filter module 10.

In order to provide substantially uniform pressure conditions within the filtrate space 22 delimited by frame element 12 and the filter media 14, 16 preferably the spacer element 42 is provided at both surfaces with a drainage layer, e.g., a non-woven sheet material (not shown).

The guiding elements may serve to reinforce the spacer element of the filter module and/or the frame element, especially when formed as an integral part thereof. Typically, it is preferred to provide the guiding elements at a lateral distance to one another corresponding to about 10 times to about 50 times the thickness of the spacer element (as measured at two opposite projections). For a frame element where the thickness of the spacer element measured at the projections 23 is about 1.5 mm a lateral distance between adjacent parallel guiding elements may be in the range from about 10 mm to about 40 mm. Such a design will provide a marked stabilization of the spacer element and/or the frame element and at the same time retain sufficient surface area of the filter media which actively takes part in a filtration process.

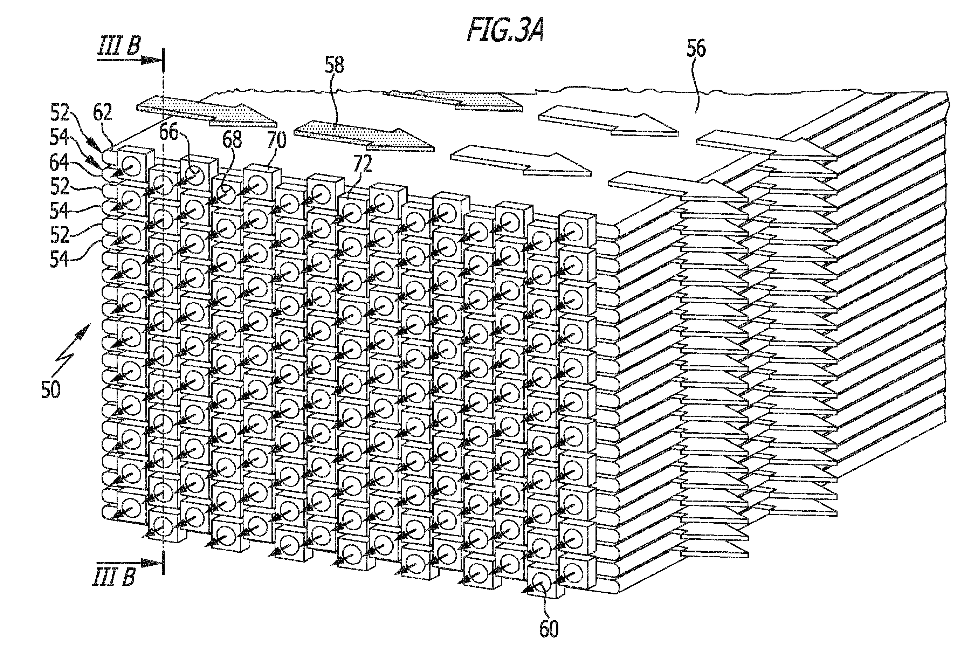

Figure 3A shows a preferred filter module set 50 according to the present invention where filter modules 52, 54 with filter media 56 are stacked on top of one another.

In Figure 3A, the set or stack 50 of filter modules 52, 54 is arranged such that the fluid flow 58 of the non-filtrate passes the upstream side (first side) of the filter media 56 of the filter modules 52, 54 in a direction which is perpendicular to the fluid flow of the filtrate/permeate 60 in an outside-in operation of the filter modules.

The frame elements 62, 64 of the filter modules 52, 54 are designed such that they simultaneously provide a spacing between the filter media 56 of successive filter modules 52, 54 and incorporate filtrate/permeate outlets 66, 68, preferably at both opposite ends of the filter modules 52, 54 corresponding to the frame sections accommodating the ports. The filtrate/permeate outlets 66, 68 are arranged such that a filtrate / permeate fluid flow 60 results which is directed perpendicular to the fluid flow of the non-filtrate 58.

The outlets 66, 68 of the filter modules 52, 54 are designed such that in the stack 50 a staggered configuration with a form fit is obtained facilitating the assembly of the stack 50. More specifically, the frame elements 62, 64 of the filter modules 52, 54 comprise projections 70, 72 extending laterally and vertically from the sections of the frame elements 62, 64 which incorporate the outlets 66, 68 and provide for the form-fit when assembled in the staggered configuration.

The projections 70, 72 as shown in Figure 3A are spaced from one another in the lateral and vertical direction by gaps.

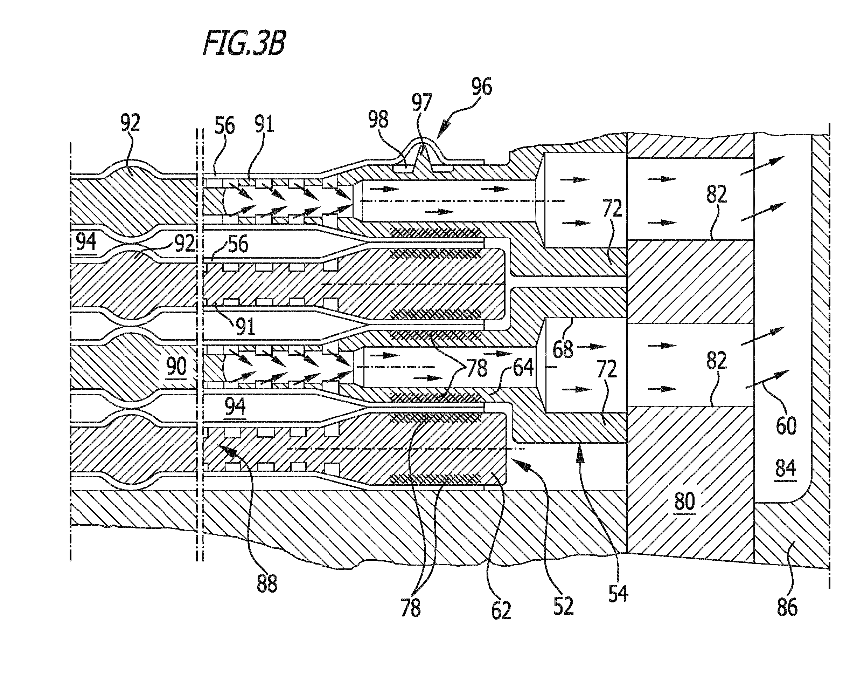

Figure 3B shows a cross-section along the line IIIB - IIIB of Figure 3A of part of the stack of filter modules 52, 54.

Figure 3B clearly shows the staggered arrangement of the filter modules 52, 54 with the projections 72 of the frame elements 64 of the filter modules 54 extending beyond the outer periphery of the frame elements 62 of the filter modules 52.

When all of the filter modules 52, 54 are assembled to form a stack, they may be attached to a common hot welding plate 80 which fixes the stack of individual filter modules 52, 54 to one unit. At the same time the hot welding plate 80 serves to seal the face of the stack 50 of filter modules 52, 54.

As an alternative to seal the face of the stack 50 by means of the hot welding plate 80, the projections 70, 72 could be designed in larger dimensions in the lateral and vertical directions thus avoiding the gaps. The projections 70, 72 may then be used to weld the filter modules 52, 54 together and optionally simultaneously provide a seal on said face of the stack 50. The hot welding plate 80 may then be omitted.

In order to provide a means for drainage of the filtrate/permeate 60 from the individual filter modules 52, 54, the hot welding plate includes openings 82 which are positioned corresponding to the filtrate/permeate outlets 66, 68 so that the filtrate/permeate 60 may be collected in a common filtrate/permeate chamber 84 which may be provided in an end cap 86. The end cap 86 preferably extends over all of a front face of the stack of filter modules 52, 54.

The individual filtrate modules 52, 54 comprise the frame elements 62, 64 with integrally formed spacer elements 88, 90 which support the membranes 56 of the individual filter modules 52, 54 on their downstream side (second side).

The spacer elements 88, 90 comprise projections 91 and guiding elements 92 so as to support the membranes 56 and deform the filter media 56 to form fluid-flow channels 94 for the non-filtrate, respectively.

In the upper part of Figure 3B, the filter module 54 is shown in a state where the membrane 56 is not yet sealed to the frame element 64. The frame element is provided with a sealing area 96 including a projection 97 and at both sides thereof indentations 98. When forming a seal 78 bonding the membrane 56 to the frame element 64, the material of the projection 97 is molten and deformed so as to fill the indentations 98. Forming of a flat and smooth seal is thereby facilitated. Preferably, the molten material of the projections 97 penetrates the filter media 56.

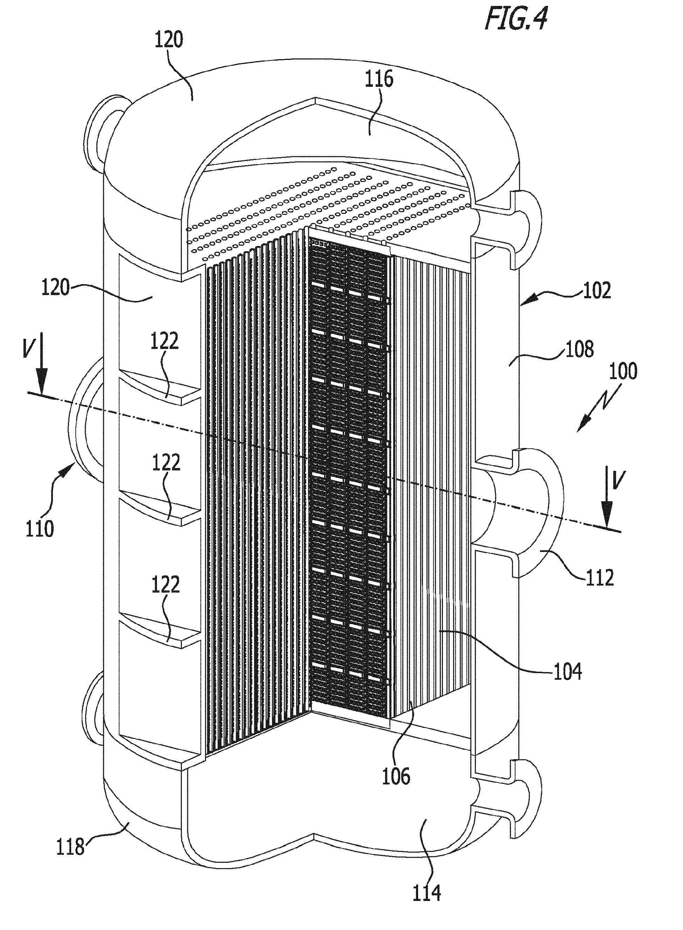

In Figure 4, a first embodiment of a filtering device 100 of the present invention is shown in a partly cut open representation comprising a housing 102 and a stack 104 of filter modules 106.

The housing 102 is composed of several parts including a central partially tubular housing 108 accommodating the stack 104 and providing an inlet chamber 110 as well as a retentate collecting space 112. The inlet chamber serves as a distributor for the non-filtrate feed and is arranged at an end of the stack 102 opposite to the end where the retentate collecting space 112 is provided.

The housing 108 may comprise flat wall parts 120 which cover two opposite sides of the stack 102 parallel to the first and the last of the filter modules 106 of the stack 102.

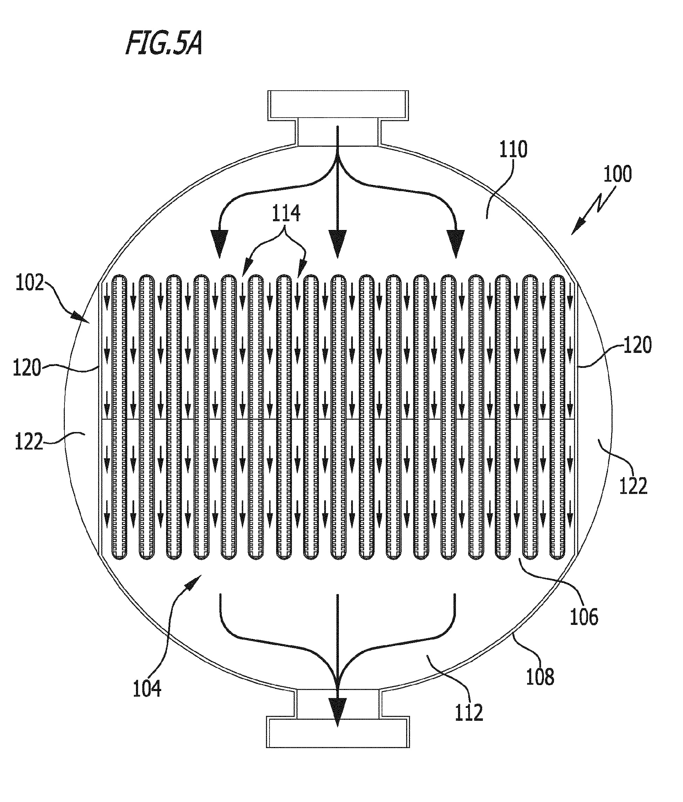

In order to stabilize the flat wall parts 120 in their planar geometry, the flat wall parts 120 may be provided on the outside surfaces with ribs 122. Thereby, the flow channels 114, 114' and 114", respectively, retain their geometry during filtration when large pressure forces act on the flat wall parts 120 (cf. Figure 5A to 5C).

In a perpendicular direction at both ends of the stack 102, filtrate collecting spaces 114, 116 are provided which optionally may be formed as separated cap shaped parts 118, 120 and welded to the housing part 108 accommodating the stack 104 of filter modules 106.

Figure 5A shows a cross-section of the filtering device 100 along line V - V of Figure 4. In Figure 5A the function of the inlet chamber 110 to evenly distribute the non-filtrate fluid flow to the various filter modules 106 is apparent. Retentate collecting chamber 112 receives the retentate from the various filter modules 106 and provides a discharge outlet. The fluid flow channels 114 between adjacent filter modules 106 have the same cross-sectional area all along their length extending from the inlet chamber 110 to the retentate collecting space 112.

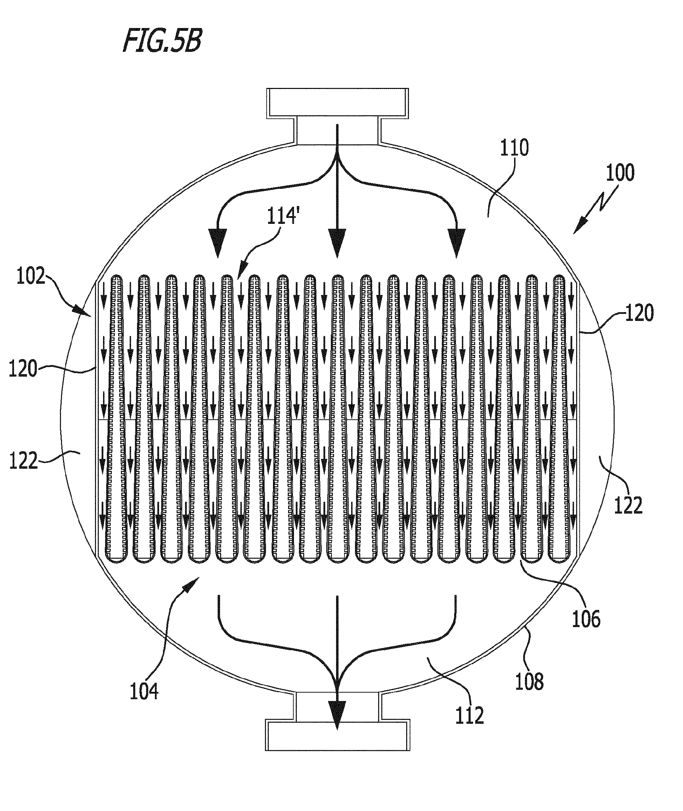

In Figure 5B, the cross-sectional area of the fluid flow path 114' for the non-filtrate continuously decreases from the inlet 110 to the outlet 112 of the filtering device 100 due to the fact that the planar faces of the frame elements defining the first and second openings are arranged in an acute angle resulting in a wedge-shaped cross-section.

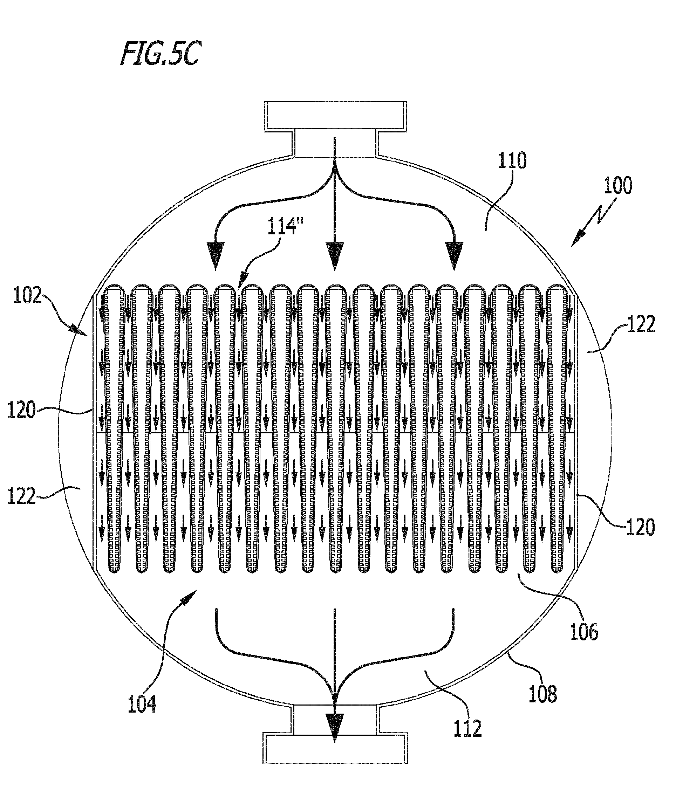

The configuration shown in Figure 5C achieves the opposite result in that the planar faces of the frame elements defining the first and second openings are arranged such that the cross-section of the fluid flow path 114" for the non-filtrate steadily increases from the inlet to the outlet of the filtering device. This may be advantageous in applications where the viscosity of the non-filtrate increases substantially along the fluid flow paths 114" from the inlet ends of the filter modules 106 to the outlet s thereof.

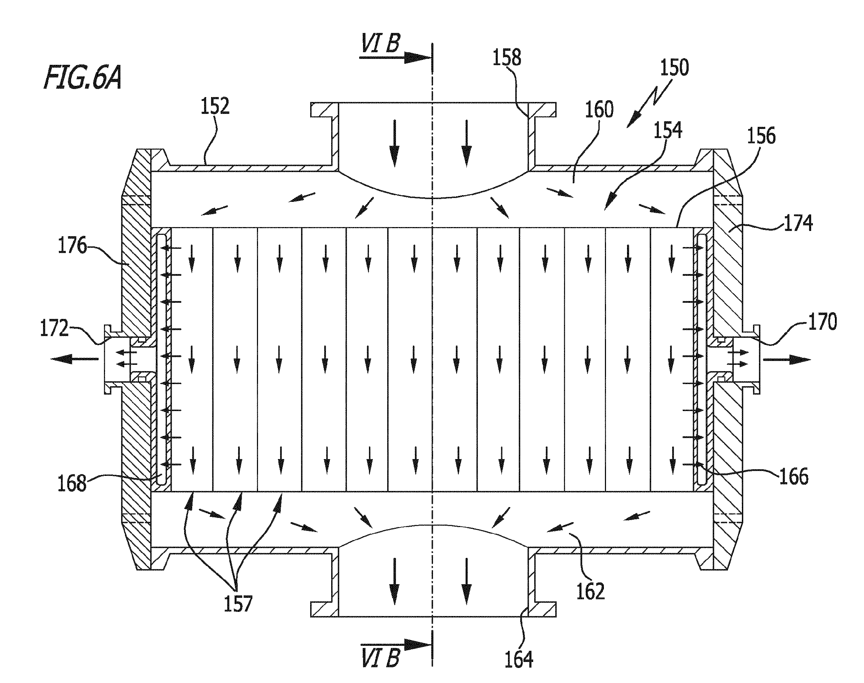

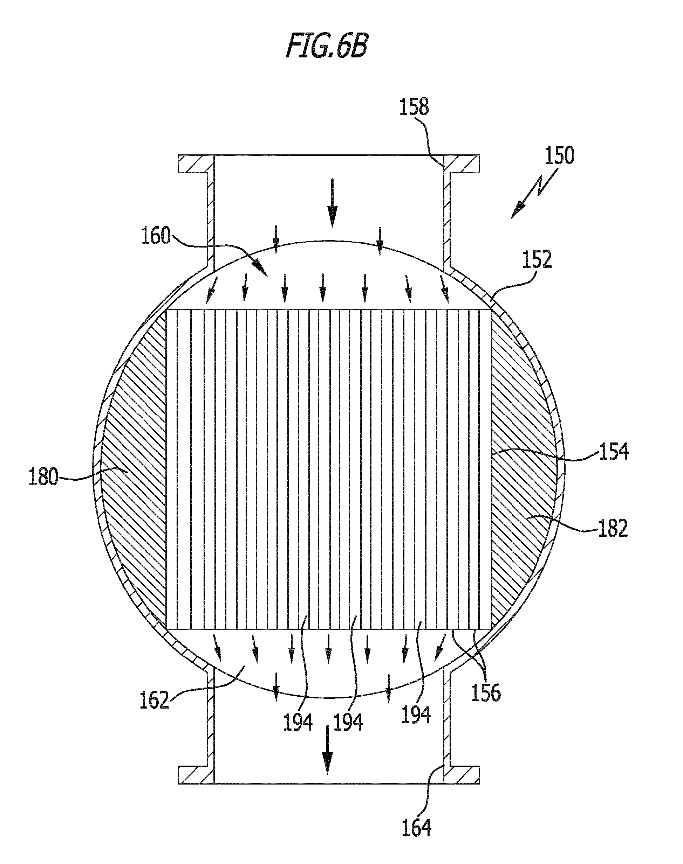

Figures 6A and 6B show a modification of the filtering device of Figures 4 and 5 in the form of a filtering device 150 in two cross-sectional representations.

The filtering device 150 comprises a tubular housing 152 accommodating a stack 154 of filter modules 156.

The housing provides an inlet 158 for the feed of non-filtrate into a feed distribution chamber 160. At the opposite end of the stack 154 the housing provides a retentate collecting chamber 162 and a retentate outlet 164.

The filter modules 156 are designed with straight fluid flow paths 157 for the non-filtrate extending from the inlet or feed distribution chamber 160 to the retentate collecting chamber 162.

In a perpendicular orientation at both ends of the tubular housing 152 filtrate collecting spaces 166, 168 are provided in fluid communication with two filtrate outlets 170, 172 provided as part of two covers 174, 176 at opposite ends of the cylindrical housing 152. The filtrate collecting spaces 166, 168 may be sealed to or sealingly attached to the stack 154 and form a part of it.

The first and the last of the filter modules 156 of the stack 154 are lined with cover elements 180, 182. The cover elements 180, 182 have a partial cylindrical body with a flat surface which faces the filter modules 156 of the stack 154.

The opposite cylindrically shaped surface rests against the wall of the tubular housing 152. Thus, the geometry of the arrangement of the filter modules 156 of the stack 154 and the fluid flow paths 157 remains essentially unchanged, even if high pressure acts on the same during filtration operation.

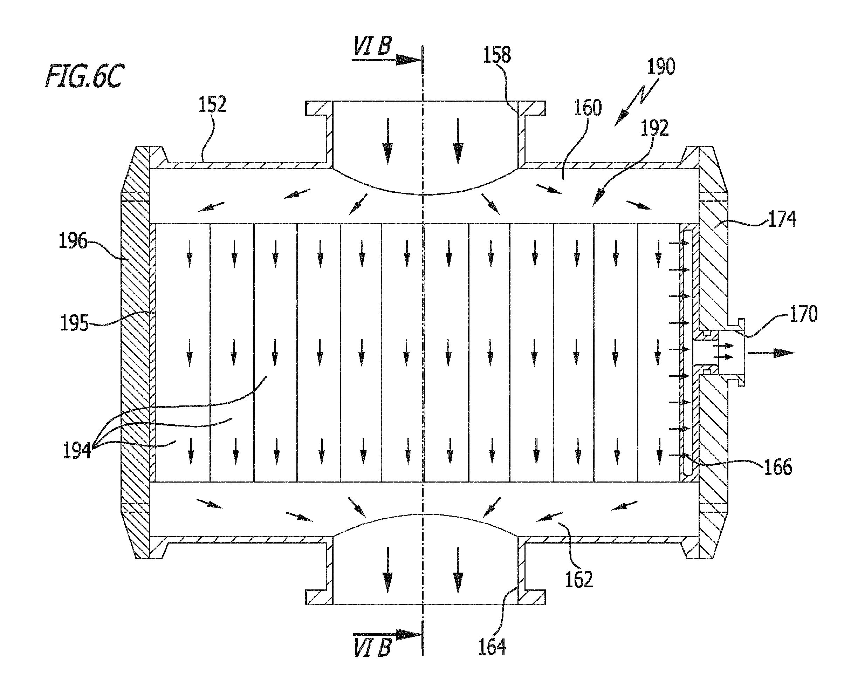

Figure 6C still shows a modification of the inventive filtering device 150 of Figures 6A and 6B in the form of a filtering device 190.

The filtering device 190 has a similar structure to that of filtering device 150, and, therefore for similar parts the same reference numerals have been used. Thus the filtering device 190 comprises a tubular housing 152 accommodating a stack 192 of filter modules 156.

The housing provides an inlet 158 for the feed of non-filtrate into a feed distribution chamber 160. At the opposite end of the stack 192 the housing 152 provides a retentate collecting chamber 162 and a retentate outlet 164.

In a perpendicular orientation at one end of the tubular housing 152 a filtrate collecting space 166 is provided in fluid communication with the filtrate outlet 170. The filtrate collecting space 166 may be sealed to the stack 154 and form a part of it.

Opposite to the filtrate collecting space 166 the stack 192 terminates in a cover plate 195, sealing that surface of the stack 192. The housing 152 terminates at the end opposite to filtrate outlet 170 with a closed cover 196.

In the configuration of Figure 6C the housing 152 may be permanently connected to the cover 196.

This type of filtering device 190 may be fixedly mounted in a production environment, and, in case a replacement of the stack 192 becomes necessary, just the cover 174 needs to be removed in order to get access to and to easily remove the stack 192 from the housing 152 and replace it with a new stack 192 upon which the cover 174 is remounted on the housing and the filtering device 190 is again ready for operation.

Figure 6B is still illustrative for the cross-section along line VIB - VIB of the embodiment of Figure 6C. The embodiment of Figure 6B is provided with straight fluid flow paths 194 extending from the inlet chamber 160 to the retentate collecting chamber 162.

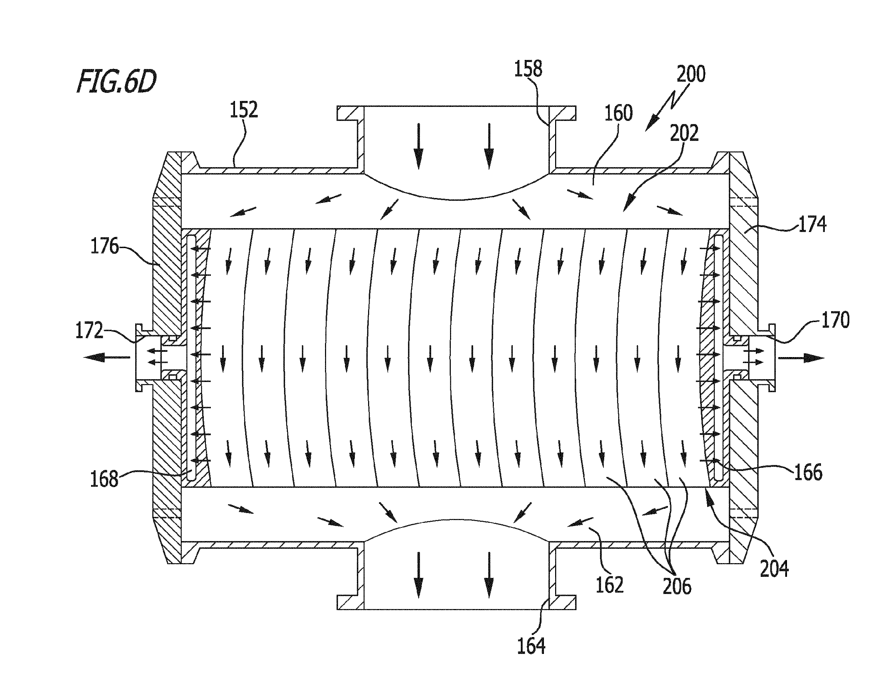

Figure 6D shows a filtering device 200 with a stack 202 of filter modules 204 according to the present invention which in many details resemble the filter module stack 154 of Figure 6A.

However, the major difference resides in the design of the filter modules 204 which, in contrast to the filter modules 156 of Figure 6A provide arcuately shaped fluid flow paths 206 for the non-filtrate. The arcuately shaped or curved flow paths or flow channels 206 create turbulences all along the flow path which serves to decrease the tendency of deposition of particulate matter and fowling of the filter medium, thus enhancing the service life of the filter module 200.

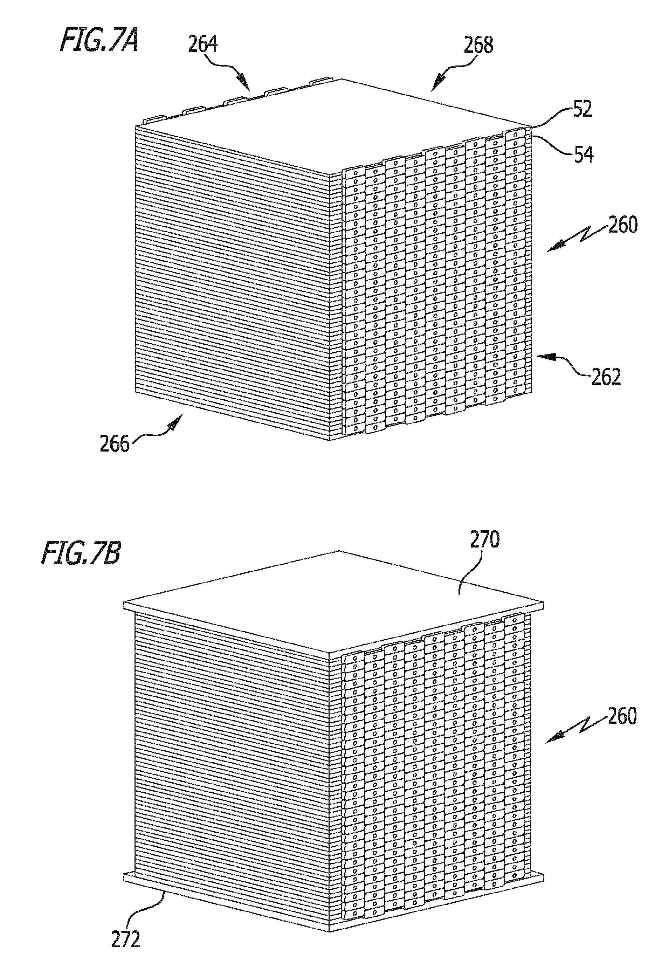

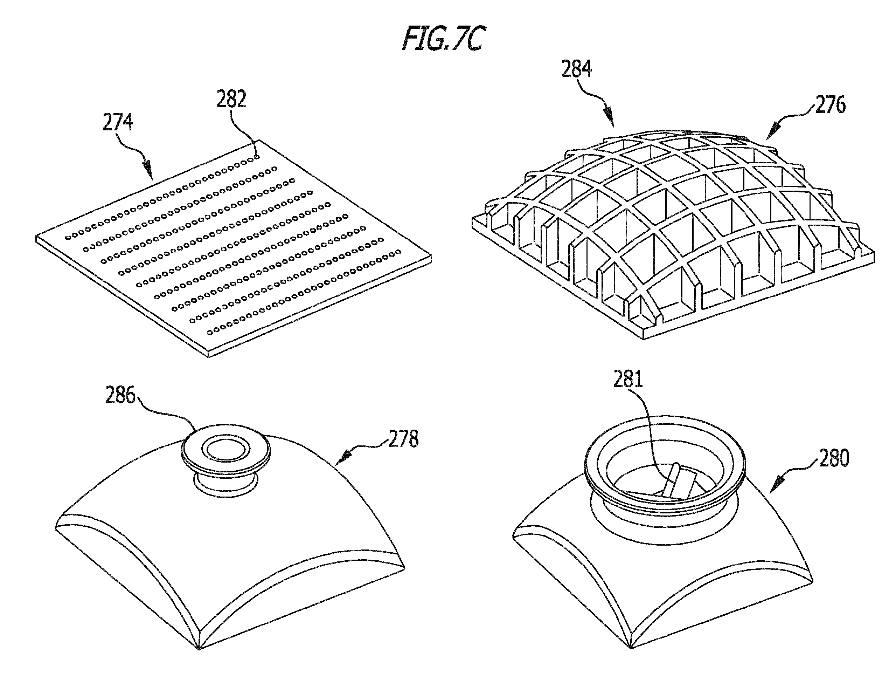

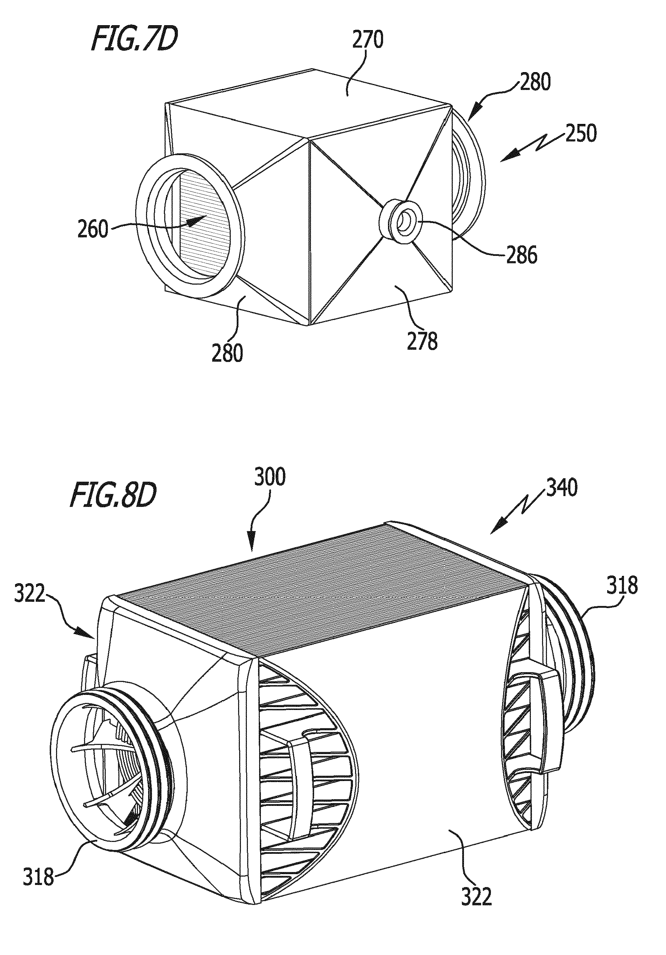

Figure 7 represents in its individual drawings 7A through 7D the various parts of an inventive filtering device 250 (Figure 7D) and a sequence of steps to be taken according to one variant of the inventive method for assembling a plurality of filter modules and further incorporating the so formed stack into a housing.

Figure 7A shows a stack 260 formed of a plurality of filter modules 52, 54, of Figure 3A and 3B.

Since the filter modules 52, 54 are shown and described in Figures 3A and 3B in some detail already, reference may be made to such drawings and the description relating thereto.

The stack 260 has two opposite side faces 262, 264 substantially formed by the projections 70, 72 incorporating the outlets 66, 68 which provide a fluid flow path from the space of each of the filter modules 52, 54 to the exterior of the stack.

Two further opposite side faces 266, 268 represent the upstream and downstream side of the stack 260, the upstream face 266 facing in operation the non-filtrate feed inlet and the downstream face 268 facing the retentate collecting chamber and retentate outlet.

The stack 260 of filter modules 52, 54 may be formed by just placing the plurality of filter modules 52 and 54 alternatingly on top of one another until the full height of the stack 260 has been reached. At this point, there is no need to fix the filter modules 52, 54 to one another, since the staggered positioning of the projections 70, 72 of the filter modules 52, 54 provides already for a precise orientation of adjacent filter modules to one another by way of a form fit.

In a next step, as shown in Figure 7B, top and bottom plates 270, 272 are placed under the bottom part and on top of the stack 260.

The supplemented stack 260 as shown in Figure 7B is now ready to receive the further parts which, when completely assembled, make up for the full filtering device 250.

Figure 7C shows several of those parts, namely an interlayer element 274, a side cap 276, an end cap 278 and a distributor/collector cap 280.

The interlayer element 274 may be positioned on the opposite side faces 262 and 264, the lines 282 of openings provided in this interlayer element 264 being arranged in line with the outlet openings 66, 68 of the projections 70, 72 of the filter modules 52 and 54.

The interlayer element 274 may be welded to the side faces 262, 264 and thereby sealing these faces to the environment as a whole.

The side cap 276 may be mounted on the top and bottom of the stack 260 and may be designed to replace the end plates 270, 272 or to be attached to the same.

The grid-like projecting structure 284 of the side cap 276 is designed to withstand the substantial pressure exerted at its position on top and on the bottom of the stack 260 during operation of the filtering device 250.

The end caps 278 may be positioned on both faces 262 and 264, either directly or on top of the interlayer element 274 providing in its interior collecting space for the retentate and a retentate outlet 286.

On the remaining two opposite faces, distributor/collection caps 280 are mounted to provide a feed inlet with a feed distribution chamber and a retentate outlet, respectively. When used as a distributor cap, the cap 280 preferably includes a fluid flow distribution element 281 which serves to evenly distribute the inflowing fluid to the various non-filtrate fluid flow paths of the stack 260.

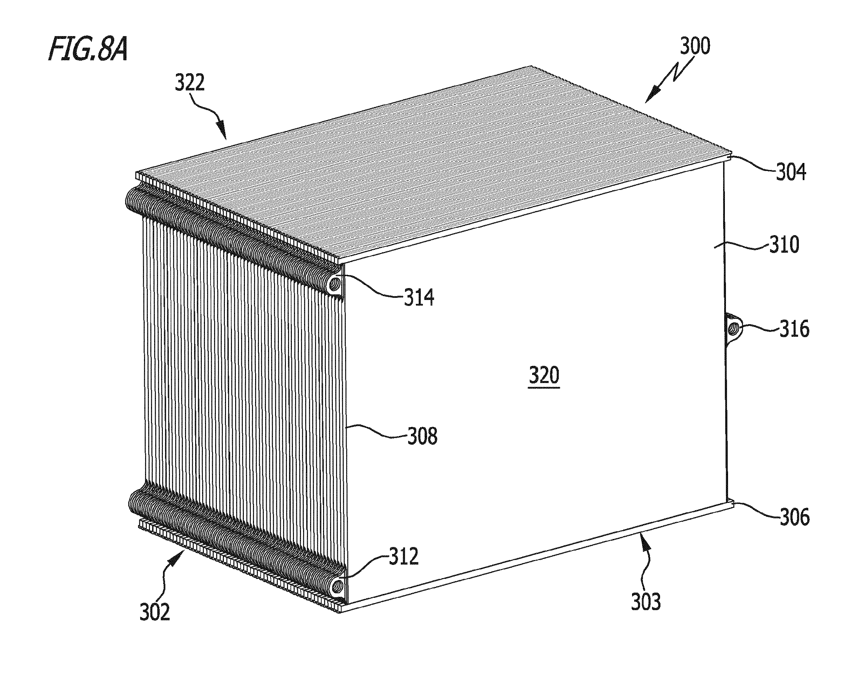

Still a further embodiment of the filtering device according to the present invention is described in connection with Figures 8A through 8C.

Figure 8A shows a stack 300 of a multiplicity of identically shaped filter modules 302 which have a generally rectangular layout.

The filter modules 302 comprise frame elements 303 which comprise at opposite sides thereof frame sections 304, 306 which accommodate ports leading to the interior space of each of the filter modules 302 (not shown in detail) similarly to what has been described in connection with Figures 1 and 2. In the representation of Figure 8A, such frame sections 304, 306 are located on the top and bottom of the stack 300.

The frame sections 304, 306 comprising the ports have a larger thickness than transverse frame sections 308, 310 connecting and holding apart the frame sections 304, 306 which are located in the stack 300 at opposite side faces, the transverse sections 308 being located on the inlet side and the transverse sections 310 being located at the outlet side of the stack 300.

The frame elements 303 of the filter modules 302 comprise at their transverse sections 308, 310 lugs 312, 314, 316 which serve during assembly of the stack 300 to correctly position the plurality of filter modules 302 on top of one another. The filter modules 302 are sealed against one another at their frame sections 304, 306 in a fluid-tight manner, whereas the side faces where the transverse frame sections 308, 310 are located remain open and provide the necessary fluid feed inlet and fluid outlet of the stack 300.

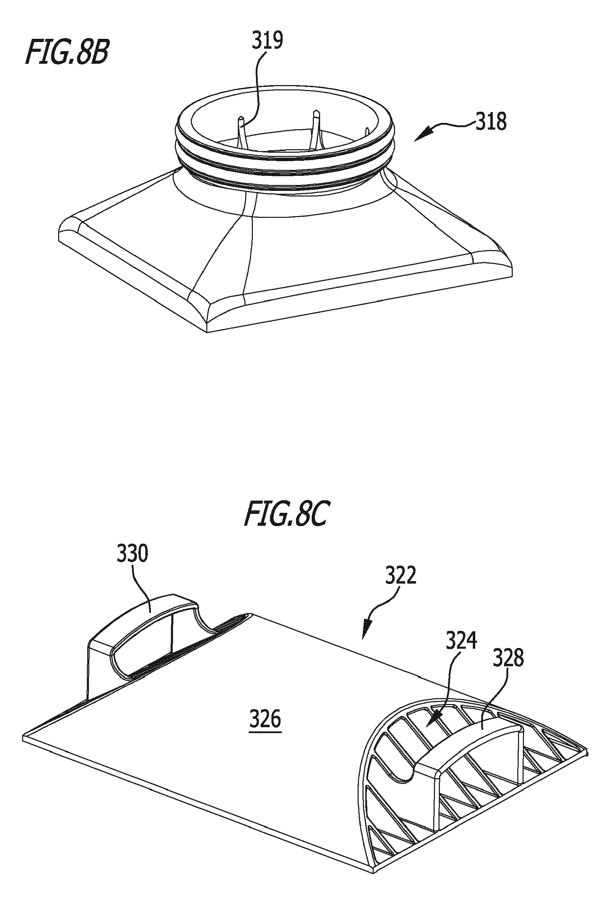

Figure 8B shows a feed distributor cap 318 which may be positioned on the face of the stack 300 including the transverse frame sections 308, and a similar or even identical cap can be placed on the side face of the stack 300 including the transverse sections 310 of the frame elements 303 serving as a collector cap for the retentate in cross-flow filtration applications.

The feed distributor cap 318 includes a structural element 319 which serves to substantially evenly distribute the fluid flow entering the cap 318 to the plurality of filter modules 302. The cap 318 when serving as a collector cap for the retentate need not necessarily have the structural elements 319.

On top of the front face 320 and the back face 322 of stack 300, side caps 322 as shown in Figure 8C may be attached which include in their interior structure a grid-like configuration 324 which may be covered in part by curved surface elements 326 which further reinforces the side cap 322.

At opposite ends of the side cap 322, handles 328, 330 are provided which facilitates handling of the stack when transformed to a complete filtering device. A filtering device which has been mostly completed is shown in Figure 8D which includes the stack 300 of Figure 8A, the distributor/collector caps 318 as well as two side caps 322.

The top of the stack 300 and its bottom end caps receiving filtrate or permeate exiting the frame sections 304, 306 of the filter modules 302 still have to be attached which may be designed similar to the end cap 278 as shown in Figure 7C.

The main difference of the design of the stack 300 and its filter modules 302 as compared the stack 260 of Figure 7A is the different ratio of width to length of the rectangular shaped filter modules 302.

Since the filter modules 302 are sealing attached to one another along their frame sections 304, 306 the distribution/collecting caps 318, the side caps 322 and the end caps may be sealingly bonded to the stack along their peripheries contacting the stack 300 only. The stack 300 of filter modules 302 is fully operable when provided with these components since they serve as a housing with the necessary inlet and outlet connections.

When sealingly bonding the plurality of filter modules in a stack to one another preferably no sealing elements are used. The attachment of the filter modules to one another to form a stack may be accomplished in various ways, including but not limited to welding, bonding by adhesive, a clamping connection and the like.

One preferred way to bond the filter modules forming the stack is to directly bond the filter modules together at their frame sections accommodating the ports.

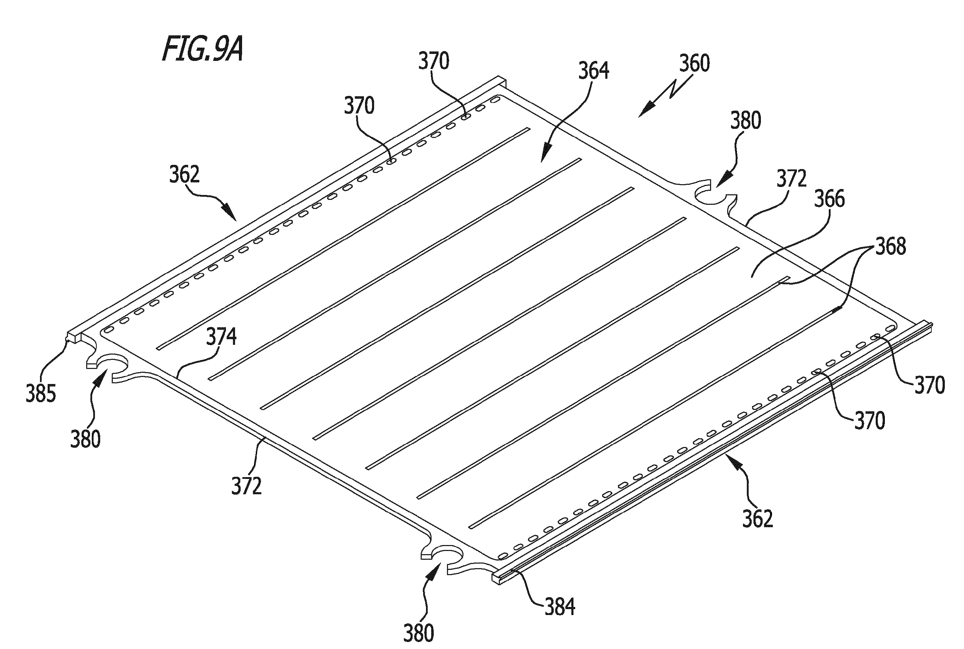

To facilitate such type of bond the frame elements of the filter module preferably include flanges outwardly projecting from the frame section accommodating the ports. A preferred type of frame element for inventive filter modules is shown in Figure 9A to 9C in the form of a frame element 360.

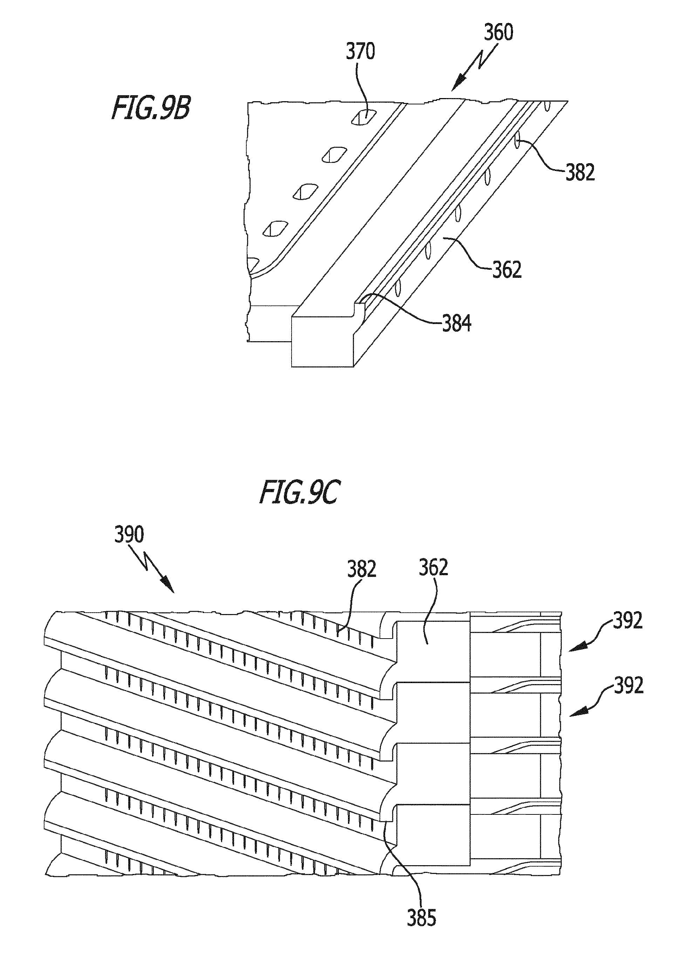

The frame element 360 has a substantially rectangular shape with two frame sections 362 located at opposite ends of the frame element 360 accommodating ports 382 (cf. Figure 9B) which provide a fluid connection from an interior of the filter module to the exterior.

The frame element 360 is uniformly formed with a spacer element 364 comprising plate shaped body 366 with structural elements 368 on opposite surfaces thereof serving as guiding elements. The spacer element 364 comprises few openings 370, e.g., adjacent to the frame sections 362 leading from the upper to the lower side the body 366 and thereby providing a unitary space within the filter module.

The frame sections 362 are connected to one another by transverse frame sections 372 defining the inlet end and the outlet end of the filter module to be formed. The thickness of the transverse sections 372 of the frame element is smaller than the thickness of the frame sections 362 accommodating the ports. Thus a sufficient clearance is provided for the fluid flow once the frame element 360 has been equipped with the filter media at its two opposite openings 374.

For ease of assembling the stack of filter modules the frame elements 360 comprise at their transverse sections 372 lugs as shown in Figure 8A or gripper clamps 380 extending outwardly from the frame elements 360.

In order to provide substantially uniform pressure conditions within the filtrate space delimited by frame element 360 and the filter media to be attached to it, preferably the spacer element 364 is provided at both surfaces with a drainage layer, e.g., a non-woven sheet material (not shown).

The frame sections 362 accommodating the ports 382 are provided along their whole length with a protruding flange 384, 385 which in the embodiment shown has an arcuate cross-section. Preferably, the protruding flanges 384, 385 are oriented with their arcuate cross-section in opposite directions. This allows the use of identically shaped side caps providing filtrate/permeate collecting chambers at both ends of the stack.

Figure 9C shows a stack 390 of a plurality of filter modules 392 in a partial representation the filter modules 390 each incorporating a frame element 360.

The frame sections 362 of the plurality of filter modules 392 form a side face of the stack 390, the flanges 384, 385 receiving the lower edge of the frame section of the frame element of the adjacent filter module 392. Once the stack 390 has been assembled the flanges 384, 385 may be heated and deformed to sealingly attach to the lower edge of the subsequent filter module thereby forming a fluid tight seal.

## Claims

1. A filter module for use in a dead-end or a cross-flow filtration process, the module comprising:
a frame element comprising two substantially planar faces defining first and second openings at opposite sides thereof;
a first and a second filter medium in the form of a sheet material, said filter media each having a first side and a second side;
the first and second filter media being attachable in a fluid tight manner to the frame element and fully cover its first and second openings, respectively,
a space defined and delimited by the frame element and the two filter media, said second sides of the filter media being arranged to face said space; and
said frame element comprising one or more frame sections accommodating one or more ports providing a fluid flow path from said space to the exterior of the filter module.

2. The filter module of claim 1, wherein said space defined by the frame element and the two filter media is designed as a unitary space.

3. The filter module of claim 1 or 2, wherein a structural element is accommodated in said space, said structural element comprising guiding elements to deform the filter media thereby forming flow channels for directing the non-filtrate fluid flow in a predefined, preferably substantially uniform direction, said direction preferably being obliquely oriented to the fluid flow within said space, said space being preferably designed as a filtrate space.

4. The filter module of claim 3, wherein the flow channels formed have a straight or arcuate configuration.

5. The filter module of claim 3 or 4, wherein the flow channels for the non-filtrate have a cross-sectional area decreasing in the flow direction, preferably wherein the height of the flow channels as measured in a direction perpendicular to the surface of the filter media decreases up to about 20% along the length of the flow path.

6. The filter module of any one of claims 1 to 5, wherein a spacer element is accommodated in said space supporting the first and second filter media in a spaced apart configuration,
optionally the spacer element comprising the guiding elements and being configured to serve additionally as a structural element.

7. The filter module of any one of claims 1 to 6, wherein the frame sections of the frame element accommodating a port comprise an outwardly directed projection of a preferably thermoplastic material, optionally said projection being in the form of a flange, preferably said flange being designed to provide a form fit with a frame section of an adjacently positioned further filter module.

8. The filter module of any one of claims 1 to 7, wherein the filter media are selected from membranes and laminated filter media, optionally wherein said respective membranes and said laminated filter media incorporate the spacer element.

9. A filter module set comprising two or more of the filter modules according to any one of claims 1 to 8, wherein the filter modules are arranged in a stack with a predefined distance in between the respective first sides of the filter media of successive filter modules of the stack,
preferably wherein said frame sections accommodating a port are positioned at one or more common side faces of the stack,
optionally wherein the predetermined distance between the filter media being such that flow channels of substantial uniform cross-sectional areas are formed.

10. The filter module set of claim 9, wherein the first surfaces of two successive filter modules in the stack are supported by a support structure on their first sides providing an open fluid flow path, said support element optionally comprising guiding elements providing flow channels for the fluid flowing along said first surface.

11. The filter module set of claim 9 or 10, wherein the inlet end for the non-filtrate and the outlet end for the retentate are arranged at opposite ends of the filter modules thus providing a non-deflected, preferably straight or arcuate fluid flow path for the non-filtrate through the stack.

12. A filtering device comprising a housing accommodating one or more of the filter modules according to any one of claims 1 to 8 and/or one or more of the filter module sets according of any one of claims 9 to 11, the housing of the filtering device comprising a non-filtrate inlet, a filtrate outlet, and optionally a retentate outlet.

13. The filtering device of claim 12, wherein the filtering device comprises a feed space, optionally comprising a non-filtrate feed distributor in fluid connection with the non-filtrate inlet providing a substantially homogeneous non-filtrate feed flow for the filter modules and/or the filter module sets, optionally said non-filtrate feed distributor comprises an insert distributing the fluid flow of the non-filtrate in the feed space.

14. The filtering device according to claim 12 or 13, wherein the cross-section of the feed inlet is smaller than the combined cross-sections of the feed channels of the filter modules, preferably the ratio of the cross-section of the feed inlet of the housing and the combined cross-sections of the feed channels of the filter modules is about 1:2 or less.

15. A method for assembling a plurality of filter modules of any one of claims 1 to 8 to form a stack, the method comprising
positioning a first filter module on top of an assembly tool,
positioning a second filter module on top of and aligned with the first filter module;
connecting the two filter modules to form a stack;
optionally positioning one or more times one further filter module on top of the stack and connecting the newly positioned filter module to the stack formed so far; or
alternatively positioning two or more up to all of the filter modules of said plurality of filter modules on top of said assembly tool,
connecting the multiplicity of positioned filter modules to form a stack in one step;
positioning eventually remaining filter modules of the plurality of filter modules on top of the so far assembled stack and connecting same thereto in one step;
optionally repeating this step until all of the filter modules have been assembled in one stack,
preferably wherein during positioning the filter modules said frame sections accommodating a port are positioned at one or more common side faces of the stack.
